# EUROPEAN PATENT APPLICATION

(11) **EP 4 836 546 A1**
(43) Date of publication of application: **04.11.2026**
(21) Application number: 24911149.3
(22) Date of filing: 24.12.2024
(51) Int. Cl.: H04W 60/00

(54) **MODEL REGISTRATION METHOD AND APPARATUS, AND STORAGE MEDIUM**

(30) Priority: 29.12.2023 CN 202311865537
(71) Applicant: Datang Mobile Communications Equipment Co., Ltd., Beijing 100085 (CN)
(72) Inventor: SUN, Wanfei, Beijing 100085 (CN); BAO, Shihan, Beijing 100085 (CN); ZHANG, Xiaokang, Beijing 100085 (CN)
(74) Representative: Studio Torta S.p.A.
(86) International application number: PCT/CN2024/142041
(87) International publication number: WO 2025/140225

(57) **Abstract**

The present disclosure provide a model registration method and apparatus, and a storage medium, relates to the field of communication technologies. The method includes: sending, by a first entity, a first message to a second entity, where the first message is used to request to register a model, the first message includes a first model identifier and/or model information, and the first model identifier is an identifier of the model in the first entity; receiving a second message sent by the second entity in response to the first message, where the second message includes a second model identifier and first indication information, the second model identifier is a network identifier allocated by the second entity for the model, and the first indication information indicates a registration decision or information related to the registration decision; and sending a third message to the second entity based on the information related to the registration decision, where the third message includes the second model identifier and the registration decision. By adding a model registration function and a corresponding registration process to a network, the network may provide services such as model registration for users, networks, or third parties on demand, thereby providing a basis for intelligent endogenous.

## Description

The present disclosure claims priority to Chinese Patent Application No. 202311865537.X, entitled "MODEL REGISTRATION METHOD AND APPARATUS, AND STORAGE MEDIUM", filed with the China National Intellectual Property Administration on December 29, 2023, which is incorporated herein by reference in its entirety.

### TECHNICAL FIELD

The present disclosure relates to the field of communication technologies, and in particular, to a model registration method and apparatus, and a storage medium.

### BACKGROUND

Intelligent endogenous of 6th generation mobile networks (6th Generation Mobile Networks, 6G) may refer to that 6G networks, by natively supporting artificial intelligence (Artificial Intelligence, AI), take an AI capability as a basic service of a network, realize AI as a service (AI as a Service, AIaaS), enable the network to self-learn and self-evolve, and then provide AI training services, AI inference services, AI deployment and open services to users, networks or third parties.

Although a network architecture and a network process of a current mobile communication system may provide users with connection and data transmission services, they cannot provide intelligent endogenous services such as AI model registration and storage.

### SUMMARY

The present disclosure provides a model registration method and apparatus, and a storage medium, which solves the technical problem that a communication system cannot provide intelligent endogenous services such as AI model registration and storage.

In a first aspect, an embodiment of the present disclosure provides a model registration method, which is applied to a first entity, and the method includes:
sending a first message to a second entity, where the first message is used to request to register a model, the first message includes a first model identifier and/or model information, and the first model identifier is an identifier of the model in the first entity;
receiving a second message sent by the second entity in response to the first message, where the second message includes a second model identifier and first indication information, the second model identifier is a network identifier allocated by the second entity for the model, and the first indication information indicates a registration decision or information related to the registration decision; and
sending a third message to the second entity based on the information related to the registration decision, where the third message includes the second model identifier and the registration decision.

In an implementation, the model is a common model.

In an implementation, the model information includes at least one of the following: a model type, a model modality, a model algorithm, model precision, model security, model privacy, model description information, a model deployment requirement, model inference performance, a model open scope, a model version, model owner information, or an automated deployment script.

In an implementation, the model description information includes at least one of the following: model accuracy, variance of the model accuracy, a data input format, a data output format, a model size, a full model identifier corresponding to a compressed model, a model parameter count, a model recall, or a model F1 value;
the model deployment requirement includes at least one of the following: model dependency, a minimum resource requirement, or a recommended resource configuration, and the resource includes a computing power resource and a storage resource.

In an implementation, the model information further includes at least one of the following: a model application scenario, model segmentation information, model compression information, or model training information.

In an implementation, the model training information includes at least one of the following: a training dataset, metadata corresponding to the training dataset, a data preprocessing method, a model feature, a model hyperparameter, or a model structure.

In an implementation, the method further includes:
receiving second indication information sent by the second entity, where the second indication information includes the first model identifier, the second model identifier and a model information template.

In an implementation, the method further includes:
sending a fourth message to the second entity; and
receiving a fifth message sent by the second entity in response to the fourth message;
   or,
sending the fourth message to a third entity; and
receiving the fifth message sent by the third entity in response to the fourth message;
where the fourth message is used to request to store the model, the fourth message includes at least one of the following: the second model identifier, a model transmission manner, a model security certificate, a model address or the model; and the fifth message is used to indicate a model storage result.

In an implementation, the method further includes:
sending the model to the second entity or the third entity.

In an implementation, the method further includes:
sending a sixth message to the second entity, where the sixth message includes the second model identifier and model updating information; and
receiving a seventh message sent by the second entity in response to the sixth message, where the seventh message is used to indicate a model updating result.

In an implementation, the method further includes:
sending an eighth message to the second entity; and
receiving a ninth message sent by the second entity in response to the eighth message;
   or,
sending the eighth message to a third entity; and
receiving the ninth message sent by the third entity in response to the eighth message;
   or,
sending the eighth message to a fourth entity; and
receiving the ninth message sent by the fourth entity in response to the eighth message;
where the eighth message is used to request to verify the model, the eighth message includes the second model identifier and the model; and the ninth message is used to indicate a model verification result.

In an implementation, the first entity is a first terminal, a first access network device, or a first core network device;
the second entity is deployed on a second terminal, a second access network device, or a second core network device;
the third entity is deployed on a third terminal, a third access network device, or a third core network device;
the fourth entity is deployed on a fourth access network device or a fourth core network device;
the first terminal, the second terminal, and the third terminal are the same or different from each other, the first access network device, the second access network device, the third access network device, and the fourth access network device are the same or different from each other, and the first core network device, the second core network device, the third core network device, and the fourth core network device are the same or different from each other.

In a second aspect, an embodiment of the present disclosure provides a model registration method, which is applied to a second entity, and the method includes:
receiving a first message sent by a first entity, where the first message is used to request to register a model, the first message includes a first model identifier and/or model information, and the first model identifier is an identifier of the model in the first entity;
sending a second message to the first entity in response to the first message, where the second message includes a second model identifier and first indication information, the second model identifier is a network identifier allocated by the second entity for the model, and the first indication information indicates a registration decision or information related to the registration decision; and
receiving a third message sent by the first entity, where the third message is a message determined based on the information related to the registration decision, and the third message includes the second model identifier and the registration decision.

In an implementation, the model is a common model.

In an implementation, the model information includes at least one of the following: a model type, a model modality, a model algorithm, model precision, model security, model privacy, model description information, a model deployment requirement, model inference performance, a model open scope, a model version, model owner information, or an automated deployment script.

In an implementation, the model description information includes at least one of the following: model accuracy, variance of the model accuracy, a data input format, a data output format, a model size, a full model identifier corresponding to a compressed model, a model parameter count, a model recall, or a model F1 value;
where the model deployment requirement includes at least one of the following: model dependency, a minimum resource requirement, or a recommended resource configuration, and the resource includes a computing power resource and a storage resource.

In an implementation, the first model information further includes at least one of the following: a model application scenario, model segmentation information, model compression information, or model training information.

In an implementation, the model training information includes at least one of the following: a training dataset, metadata corresponding to the training dataset, a data preprocessing method, a model feature, a model hyperparameter, or a model structure.

In an implementation, the method further includes:
sending second indication information to the first entity, where the second indication information includes the first model identifier, the second model identifier and a model information template.

In an implementation, the method further includes:
receiving a fourth message sent by the first entity, where the fourth message is used to request to store the model, the fourth message includes at least one of the following: the second model identifier, a model transmission manner, a model security certificate, a model address or the model; and
sending a fifth message to the first entity in response to the fourth message, where the fifth message is used to indicate a model storage result.

In an implementation, the method further includes:
receiving the model.

In an implementation, the method further includes:
sending a tenth message to a third entity; and
receiving an eleventh message sent by the third entity in response to the tenth message;
   or,
sending the tenth message to a fourth entity; and
receiving the eleventh message sent by the fourth entity in response to the tenth message;
where the tenth message is used to request to store the model, the tenth message includes at least one of the following: the second model identifier, a model transmission manner, a model security certificate or the model; and the eleventh message is used to indicate a model storage result.

In an implementation, the method further includes:
sending the model to the third entity or the fourth entity.

In an implementation, the method further includes:
receiving a sixth message sent by the first entity, where the sixth message includes the second model identifier and model updating information; and
sending a seventh message to the first entity in response to the sixth message, where the seventh message is used to indicate a model updating result.

In an implementation, the method further includes:
receiving an eighth message sent by the first entity, where the eighth message is used to request to verify the model, and the eighth message includes the second model identifier and the model; and
sending a ninth message to the first entity in response to the eighth message, where the ninth message is used to indicate a model verification result.

In a third aspect, an embodiment of the present disclosure provides a model registration method, which is applied to a third entity, and the method includes:
receiving a model storage request message, where the model storage request message includes at least one of the following: a second model identifier, a model transmission manner, a model security certificate, a model address or a model, the second model identifier is a network identifier allocated by a second entity for the model, and the model storage request message is a fourth message sent by a first entity, a tenth message sent by the second entity, or a twelfth message sent by a fourth entity; and
sending a model storage response message, where the model storage response message is used to indicate a model storage result, and the storage response message is a fifth message sent to the first entity, an eleventh message sent to the second entity, or a thirteenth message sent to the fourth entity.

In an implementation, the method further includes:
receiving the model.

In an implementation, the method further includes:
receiving an eighth message sent by the first entity, where the eighth message is used to request to verify the model, and the eighth message includes the second model identifier and the model; and
sending a ninth message to the first entity in response to the eighth message, where the ninth message is used to indicate a model verification result.

In a fourth aspect, an embodiment of the present disclosure provides a model registration method, which is applied to a fourth entity, and the method includes:
receiving an eighth message sent by a first entity, where the eighth message is used to request to verify a model, the eighth message includes a second model identifier and the model, and the second model identifier is a network identifier allocated by a second entity for the model; and
sending a ninth message to the first entity in response to the eighth message, where the ninth message is used to indicate a model verification result.

In an implementation, the method further includes:
receiving a tenth message sent by the second entity, where the tenth message is used to request to store the model, the tenth message includes the second model identifier; and
sending an eleventh message to the second entity in response to the tenth message, where the eleventh message is used to indicate a model storage result.

In an implementation, the method further includes:
sending a twelfth message to a third entity, where the twelfth message is used to request to store the model, and the twelfth message includes at least one of the following: the second model identifier, a model transmission manner, a model security certificate or the model; and
receiving a thirteenth message sent by the third entity, where the thirteenth message is used to indicate a model storage result.

In a fifth aspect, an embodiment of the present disclosure provides a model registration apparatus, which is applied to a first entity, and the apparatus includes:
a first sending unit, configured to send a first message to a second entity, where the first message is used to request to register a model, the first message includes a first model identifier and/or model information, and the first model identifier is an identifier of the model in the first entity;
a first receiving unit, configured to receive a second message sent by the second entity in response to the first message, where the second message includes a second model identifier and first indication information, the second model identifier is a network identifier allocated by the second entity for the model, and the first indication information indicates a registration decision or information related to the registration decision; and
a second sending unit, configured to send a third message to the second entity based on the information related to the registration decision, where the third message includes the second model identifier and the registration decision.

In a sixth aspect, an embodiment of the present disclosure provides a model registration apparatus, which is applied to a second entity, and the apparatus includes:
a first receiving unit, configured to receive a first message sent by a first entity, where the first message is used to request to register a model, the first message includes a first model identifier and/or model information, and the first model identifier is an identifier of the model in the first entity;
a first sending unit, configured to send a second message to the first entity in response to the first message, where the second message includes a second model identifier and first indication information, the second model identifier is a network identifier allocated by the second entity for the model, and the first indication information indicates a registration decision or information related to the registration decision; and
a second receiving unit, configured to receive a third message sent by the first entity, where the third message is a message determined based on the information related to the registration decision, and the third message includes the second model identifier and the registration decision.

In a seventh aspect, an embodiment of the present disclosure provides a model registration apparatus, which is applied to a third entity, and the apparatus includes:
a first receiving unit, configured to receive a model storage request message, where the model storage request message includes at least one of the following: a second model identifier, a model transmission manner, a model security certificate, a model address or a model, the second model identifier is a network identifier allocated by a second entity for the model, and the model storage request message is a fourth message sent by a first entity, a tenth message sent by the second entity, or a twelfth message sent by a fourth entity; and
a first sending unit, configured to send a model storage response message, where the model storage response message is used to indicate a model storage result, and the storage response message is a fifth message sent to the first entity, an eleventh message sent to the second entity, or a thirteenth message sent to the fourth entity.

In an eighth aspect, an embodiment of the present disclosure provides a model registration apparatus, which is applied to a fourth entity, and the apparatus includes:
a first receiving unit, configured to receive an eighth message sent by a first entity, where the eighth message is used to request to verify a model, the eighth message includes a second model identifier and the model, and the second model identifier is a network identifier allocated by a second entity for the model; and
a first sending unit, configured to send a ninth message to the first entity in response to the eighth message, where the ninth message is used to indicate a model verification result.

In a ninth aspect, an embodiment of the present disclosure provides a model registration apparatus, which is applied to a first entity, and the apparatus includes: a memory, a transceiver, and a processor:
where the memory is configured to store computer programs; the transceiver is configured to send and receive data under control of the processor; the processor is configured to read the computer programs from the memory and perform the following operations:
sending a first message to a second entity, where the first message is used to request to register a model, the first message includes a first model identifier and/or model information, and the first model identifier is an identifier of the model in the first entity;
receiving a second message sent by the second entity in response to the first message, where the second message includes a second model identifier and first indication information, the second model identifier is a network identifier allocated by the second entity for the model, and the first indication information indicates a registration decision or information related to the registration decision; and
sending a third message to the second entity based on the information related to the registration decision, where the third message includes the second model identifier and the registration decision.

In an implementation, the model is a common model.

In an implementation, the model information includes at least one of the following: a model type, a model modality, a model algorithm, model precision, model security, model privacy, model description information, a model deployment requirement, model inference performance, a model open scope, a model version, model owner information, or an automated deployment script.

In an implementation, the model description information includes at least one of the following: model accuracy, variance of the model accuracy, a data input format, a data output format, a model size, a full model identifier corresponding to a compressed model, a model parameter count, a model recall, or a model F1 value;
the model deployment requirement includes at least one of the following: model dependency, a minimum resource requirement, or a recommended resource configuration, and the resource includes a computing power resource and a storage resource.

In an implementation, the model information further includes at least one of the following: a model application scenario, model segmentation information, model compression information, or model training information.

In an implementation, the model training information includes at least one of the following: a training dataset, metadata corresponding to the training dataset, a data preprocessing method, a model feature, a model hyperparameter, or a model structure.

In an implementation, the processor is further configured to perform the following operations:
receiving second indication information sent by the second entity, where the second indication information includes the first model identifier, the second model identifier and a model information template.

In an implementation, the processor is further configured to perform the following operations:
sending a fourth message to the second entity; and
receiving a fifth message sent by the second entity in response to the fourth message;
   or,
sending the fourth message to a third entity; and
receiving the fifth message sent by the third entity in response to the fourth message;
where the fourth message is used to request to store the model, the fourth message includes at least one of the following: the second model identifier, a model transmission manner, a model security certificate, a model address or the model; and the fifth message is used to indicate a model storage result.

In an implementation, the processor is further configured to perform the following operations:
sending the model to the second entity or the third entity.

In an implementation, the processor is further configured to perform the following operations:
sending a sixth message to the second entity, where the sixth message includes the second model identifier and model updating information; and
receiving a seventh message sent by the second entity in response to the sixth message, where the seventh message is used to indicate a model updating result.

In an implementation, the processor is further configured to perform the following operations:
sending an eighth message to the second entity; and
receiving a ninth message sent by the second entity in response to the eighth message;
   or,
sending the eighth message to a third entity; and
receiving the ninth message sent by the third entity in response to the eighth message;
   or,
sending the eighth message to a fourth entity; and
receiving the ninth message sent by the fourth entity in response to the eighth message;
where the eighth message is used to request to verify the model, the eighth message includes the second model identifier and the model; and the ninth message is used to indicate a model verification result.

In a tenth aspect, an embodiment of the present disclosure provides a model registration apparatus, which is applied to a second entity, and the apparatus includes: a memory, a transceiver, and a processor:
where the memory is configured to store computer programs; the transceiver is configured to send and receive data under control of the processor; the processor is configured to read the computer programs from the memory and perform the following operations:
receiving a first message sent by a first entity, where the first message is used to request to register a model, the first message includes a first model identifier and/or model information, and the first model identifier is an identifier of the model in the first entity;
sending a second message to the first entity in response to the first message, where the second message includes a second model identifier and first indication information, the second model identifier is a network identifier allocated by the second entity for the model, and the first indication information indicates a registration decision or information related to the registration decision; and
receiving a third message sent by the first entity, where the third message is a message determined based on the information related to the registration decision, and the third message includes the second model identifier and the registration decision.

In an implementation, the model is a common model.

In an implementation, the model information includes at least one of the following: a model type, a model modality, a model algorithm, model precision, model security, model privacy, model description information, a model deployment requirement, model inference performance, a model open scope, a model version, model owner information, or an automated deployment script.

In an implementation, the model description information includes at least one of the following: model accuracy, variance of the model accuracy, a data input format, a data output format, a model size, a full model identifier corresponding to a compressed model, a model parameter count, a model recall, or a model F1 value;
where the model deployment requirement includes at least one of the following: model dependency, a minimum resource requirement, or a recommended resource configuration, and the resource includes a computing power resource and a storage resource.

In an implementation, the model information further includes at least one of the following: a model application scenario, model segmentation information, model compression information, or model training information.

In an implementation, the model training information includes at least one of the following: a training dataset, metadata corresponding to the training dataset, a data preprocessing method, a model feature, a model hyperparameter, or a model structure.

In an implementation, the processor is further configured to perform the following operations:
sending second indication information to the first entity, where the second indication information includes the first model identifier, the second model identifier and a model information template.

In an implementation, the processor is further configured to perform the following operations:
receiving a fourth message sent by the first entity, where the fourth message is used to request to store the model, and the fourth message includes at least one of the following: the second model identifier, a model transmission manner, a model security certificate, a model address or the model; and
sending a fifth message to the first entity in response to the fourth message, where the fifth message is used to indicate a model storage result.

In an implementation, the processor is further configured to perform the following operations:
receiving the model.

In an implementation, the processor is further configured to perform the following operations:
sending a tenth message to a third entity; and
receiving an eleventh message sent by the third entity in response to the tenth message;
   or,
sending the tenth message to a fourth entity; and
receiving the eleventh message sent by the fourth entity in response to the tenth message;
where the tenth message is used to request to store the model, the tenth message includes at least one of the following: the second model identifier, a model transmission manner, a model security certificate or the model; and the eleventh message is used to indicate a model storage result.

In an implementation, the processor is further configured to perform the following operations:
sending the model to the third entity or the fourth entity.

In an implementation, the processor is further configured to perform the following operations:
receiving a sixth message sent by the first entity, where the sixth message includes the second model identifier and model updating information; and
sending a seventh message to the first entity in response to the sixth message, where the seventh message is used to indicate a model updating result.

In an implementation, the processor is further configured to perform the following operations:
receiving an eighth message sent by the first entity, where the eighth message is used to request to verify the model, and the eighth message includes the second model identifier and the model; and
sending a ninth message to the first entity in response to the eighth message, where the ninth message is used to indicate a model verification result.

In an eleventh aspect, an embodiment of the present disclosure provides a model registration apparatus, which is applied to a third entity, and the apparatus includes: a memory, a transceiver, and a processor:
where the memory is configured to store computer programs; the transceiver is configured to send and receive data under control of the processor; the processor is configured to read the computer programs from the memory and perform the following operations:
receiving a model storage request message, where the model storage request message includes at least one of the following: a second model identifier, a model transmission manner, a model security certificate, a model address or a model, the second model identifier is a network identifier allocated by a second entity for the model, and the model storage request message is a fourth message sent by a first entity, a tenth message sent by the second entity, or a twelfth message sent by a fourth entity; and
sending a model storage response message, where the model storage response message is used to indicate a model storage result, and the storage response message is a fifth message sent to the first entity, an eleventh message sent to the second entity, or a thirteenth message sent to the fourth entity.

In an implementation, the processor is further configured to perform the following operations:
receiving the model.

In an implementation, the processor is further configured to perform the following operations:
receiving an eighth message sent by the first entity, where the eighth message is used to request to verify the model, and the eighth message includes the second model identifier and the model; and
sending a ninth message to the first entity in response to the eighth message, where the ninth message is used to indicate a model verification result.

In a twelfth aspect, an embodiment of the present disclosure provides a model registration apparatus, which is applied to a fourth entity, and the apparatus includes: a memory, a transceiver, and a processor:
where the memory is configured to store computer programs; the transceiver is configured to send and receive data under control of the processor; the processor is configured to read the computer programs from the memory and perform the following operations:
receiving an eighth message sent by a first entity, where the eighth message is used to request to verify a model, the eighth message includes a second model identifier and the model, and the second model identifier is a network identifier allocated by a second entity for the model; and
sending a ninth message to the first entity in response to the eighth message, where the ninth message is used to indicate a model verification result.

In an implementation, the processor is further configured to perform the following operations:
receiving a tenth message sent by the second entity, where the tenth message is used to request to store the model, the tenth message includes the second model identifier; and
sending an eleventh message to the second entity in response to the tenth message, where the eleventh message is used to indicate a model storage result.

In an implementation, the processor is further configured to perform the following operations:
sending a twelfth message to a third entity, where the twelfth message is used to request to store the model, the twelfth message includes at least one of the following: the second model identifier, a model transmission manner, a model security certificate or the model; and
receiving a thirteenth message sent by the third entity, where the thirteenth message is used to indicate a model storage result.

In a thirteenth aspect, an embodiment of the present disclosure provides a non-transitory readable storage medium having computer programs stored therein, where the computer programs cause a processor to perform the method of any one of the first aspect.

In a fourteenth aspect, an embodiment of the present disclosure provides a non-transitory readable storage medium having computer programs stored therein, where the computer programs cause a processor to perform the method of any one of the second aspect.

In a fifteenth aspect, an embodiment of the present disclosure provides a non-transitory readable storage medium having computer programs stored therein, where the computer programs cause a processor to perform the method of any one of the third aspect.

In a sixteenth aspect, an embodiment of the present disclosure provides a non-transitory readable storage medium having computer programs stored therein, where the computer programs cause a processor to perform the method of any one of the fourth aspect.

Embodiments of the present disclosure provide a model registration method and apparatus, and a storage medium. The method includes: sending, by a first entity, a first message to a second entity, where the first message is used to request to register a model, the first message includes a first model identifier and/or model information, and the first model identifier is an identifier of the model in the first entity; receiving a second message sent by the second entity in response to the first message, where the second message includes a second model identifier and first indication information, the second model identifier is a network identifier allocated by the second entity for the model, and the first indication information indicates a registration decision or information related to the registration decision; and sending a third message to the second entity based on the information related to the registration decision, where the third message includes the second model identifier and the registration decision. By adding a model registration function and a corresponding registration process to a network, the network may provide services such as common model registration for users, networks, or third parties on demand, thereby providing a basis for intelligent endogenous.

It should be understood that the content described in the above Summary is not intended to limit key features or important features of the embodiments of the present invention, nor is it intended to limit the scope of the present invention. Other features of the present invention will become readily understood through the following description.

### BRIEF DESCRIPTION OF DRAWINGS

In order to explain the present disclosure or the technical solutions in the related art more clearly, the drawings needed to be used in the embodiments or the description of the related art will be introduced briefly in the following. Obviously, the drawings in the following description are some embodiments of the present disclosure. For those ordinary skilled in the art, other drawings can be obtained from these drawings without paying creative labor.
FIG. 1 is a schematic diagram of an architecture of a communication system in the related art.
FIG. 2 is a schematic diagram of an architecture of a communication system provided by an embodiment of the present disclosure.
FIG. 3 is another schematic diagram of the architecture of a communication system provided by an embodiment of the present disclosure.
FIG. 4 is a first flowchart of a model registration method provided by an embodiment of the present disclosure.
FIG. 5 is a flowchart of a model verification method provided by an embodiment of the present disclosure.
FIG. 6 is a flowchart of a model storage method provided by an embodiment of the present disclosure.
FIG. 7 is a flowchart of a model updating method provided by an embodiment of the present disclosure.
FIG. 8 is a second flowchart of a model registration method provided by an embodiment of the present disclosure.
FIG. 9 is a third flowchart of a model registration method provided by an embodiment of the present disclosure.
FIG. 10 is a fourth flowchart of a model registration method provided by an embodiment of the present disclosure.
FIG. 11 is a fifth flowchart of a model registration method provided by an embodiment of the present disclosure.
FIG. 12 is a sixth flowchart of a model registration method provided by an embodiment of the present disclosure.
FIG. 13 is a seventh flowchart of a model registration method provided by an embodiment of the present disclosure.
FIG. 14 is a schematic structural diagram of a model registration apparatus 1400 provided by an embodiment of the present disclosure.
FIG. 15 is a schematic structural diagram of a model registration apparatus 1500 provided by an embodiment of the present disclosure.
FIG. 16 is a schematic structural diagram of a model registration apparatus 1600 provided by an embodiment of the present disclosure.
FIG. 17 is a schematic structural diagram of a model registration apparatus 1700 provided by an embodiment of the present disclosure.
FIG. 18 is a schematic structural diagram of a model registration apparatus 1800 provided by an embodiment of the present disclosure.
FIG. 19 is a schematic structural diagram of a model registration apparatus 1900 provided by an embodiment of the present disclosure.
FIG. 20 is a schematic structural diagram of a model registration apparatus 2000 provided by an embodiment of the present disclosure.
FIG. 21 is a schematic structural diagram of a model registration apparatus 2100 provided by an embodiment of the present disclosure.

### DESCRIPTION OF EMBODIMENTS

In the embodiments of the present disclosure, the term "and/or" describes an association relationship of associated objects, which represents that there may be three relationships. For example, A and/or B may represent three situations: A exists alone, A and B exist at the same time, and B exists alone. The character "/" generally represents that the associated objects before and after the character are in an "or" relationship.

The term "plurality" in the embodiments of the present disclosure refers to two or more than two, and other quantifiers are similar thereto.

The descriptions such as "first" and "second" that appear in the embodiments of the present disclosure are only used for illustration and distinction of the described objects, and have no order, nor do they represent a special limitation on the number of objects in the embodiments of the present disclosure, and cannot constitute any limitation on the embodiments of the present disclosure. For example, a first model identifier is an identifier of a model in a first entity, and a second model identifier is an identifier of a model in a network. The descriptions such as "first" and "second" are used only to distinguish different model identifiers, rather than to indicate the difference in size, priority or importance degree of the two model identifiers.

The technical solutions in the embodiments of the present disclosure are clearly and completely described in the following with reference to the accompanying drawings of the embodiments of the present disclosure. Obviously, the described embodiments are part of embodiments of the present disclosure, not all embodiments. Based on the embodiments of the present disclosure, all other embodiments obtained by those skilled in the art without creative labor are all within the protection scope of the present disclosure.

The embodiments of the present disclosure provide a model registration and apparatus for providing services such as common model registration to users, networks or third parties on demand.

The method and the apparatus are based on the same application concept. Since the method and the apparatus solve the problem in a similar principle, the implementation of the apparatus and the method can refer to each other, and the repeated parts will not be repeated.

A terminal device involved in the embodiments of the present disclosure may be a device that provides voice and/or data connectivity to a user, which may be a handheld device with a wireless connection function, or other processing devices connected to a wireless modem. In different systems, the names of terminal devices may also be different. For example, in a 5G system, the terminal device may be called a user equipment (User Equipment, UE). A wireless terminal device may be a USB storage device, other personal computer memory devices, and a dongle, or may also be communicated with one or more core networks (Core Networks, CNs) via a radio access network (Radio Access Network, RAN). The wireless terminal device may be a mobile terminal device, such as a mobile phone (or known as "cellular" phone) and a computer with the mobile terminal device. For example, the mobile terminal device may be a portable, pocket-sized, handheld, computer-built-in, or vehicle-mounted mobile apparatus that exchanges language and/or data with a radio access network. For example, the mobile terminal device may be a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA), a personal computer, a tablet computer, a machine-type communication (Machine-type Communication, MTC) terminal device, and other devices. The wireless terminal device may also be referred to as a system, a subscriber unit (subscriber unit), a subscriber station (subscriber station), a mobile station (mobile station), a mobile table (mobile), a remote station (remote station), an access point (access point), a remote terminal device (remote terminal device), an access terminal device (access terminal device), a user terminal device (user terminal), a user agent (user agent), a user device (user device), and a wireless access point and a router/modem that meet the limitations of this definition, which is not limited in the embodiments of the present disclosure.

An access network device involved in the embodiments of the present disclosure may be a base station, which may include multiple cells providing services to the terminal. According to different application scenarios, the base station may also be known as an access point, or may be a device in an access network that communicates with the wireless terminal device through one or more sectors on an air interface, or other names. A network device may be used to interchange received air frames with internet protocol (Internet Protocol, IP) packets, and act as a router between the wireless terminal device and the rest parts of the access network, which may include an internet protocol (IP) communication network. The network device may also coordinate attribute management for the air interface. For example, the network device involved in the embodiments of the present disclosure may be an evolutionary network device (evolutional Node B, eNB or e-NodeB) in a long term evolution (long term evolution, LTE) system, a 5G base station (gNB) in a 5G network architecture (next generation system), etc., or a home evolved Node B (Home evolved Node B, HeNB), a relay node (relay node), a home base station (femto), a pico base station (pico), a network test device, etc., which is not limited in the embodiments of the present disclosure. In some network structures, the network device may include centralized unit (centralized unit, CU) nodes and distributed unit (distributed unit, DU) nodes, and the centralized unit and the distributed unit may also be arranged geographically separately.

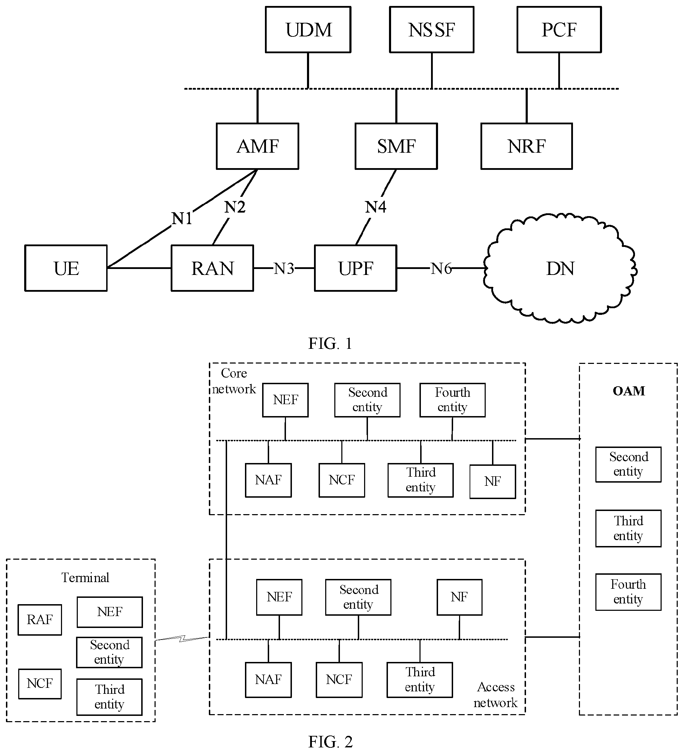

FIG. 1 is a schematic diagram of an architecture of a communication system in the related art. As shown in FIG. 1, the architecture includes a terminal device, an access network device, a core network device and a data network (Data Network, DN) part.

The core network device may also be referred to as a core network network element or a core network functional entity. As an example, the core network functional entity may include any of the following: a policy control function (Policy Control Function, PCF) entity, a network slice selection function (Network Slice Selection Function, NSSF) entity, a unified data management (Unified Data Management, UDM) entity, a network repository function (Network Repository Function, NRF) entity, a session management function (Session Management Function, SMF) entity, an access and mobility management function (Access and Mobility Management Function, AMF) entity, and a user plane function (User Plane Function, UPF) entity. As an example, the functions of the above functional entities are as follows:
The PCF entity is mainly used to guide a unified policy framework of network behavior and provide policy rule information for control plane entity (such as AMF, SMF, etc.).

The AMF entity is mainly used for access control, mobility management, registration and deregistration and other functions.

The SMF entity is mainly used for user plane network element selection, user plane network element redirection, IP address allocation for a terminal device, and session establishment, modification and release as well as quality of service (Quality of Service, QoS) control.

The UPF entity is mainly used to receive and forward user plane data. For example, the UPF entity may receive user plane data from a service server and send the user plane data to the terminal device through an access network device. The UPF entity may also receive the user plane data from the terminal device through the access network device and forward it to the service server.

The NSSF entity is mainly used for network slice selection.

The UDM entity is mainly used for contract data management of the terminal device, including storage and management of a terminal device identifier, access authorization of the terminal device, etc.

A data network part may be a data network that provides a service service to a user. Generally, a client is located in the terminal device and the server is located in the data network. The data network may be a private network, such as a local area network, or an external network that is not controlled by an operator, such as the Internet, or a proprietary network jointly deployed by operators.

A network architecture of a current 5G mobile communication system may be shown in FIG. 1. Similar to previous mobile communication systems, it is designed with connection and data transmission as a center, it can provide the user with a connection and data transmission service, but cannot provide intelligent endogenous services such as a model registration service and a model storage service.

Based on the technical problems in the related art, the embodiment of the present disclosure provides a model registration method, which may build a common model registration process through interactions between multiple entities in the communication system, so that the communication system may provide common model registration, storage and other services to users, networks or third parties on demand.

In the embodiments of the present disclosure, providing a common model registration service through the communication system may refer to completing the common model registration process through interactions between multiple entities in the communication system; the common model registration service may refer to an entire common model registration process.

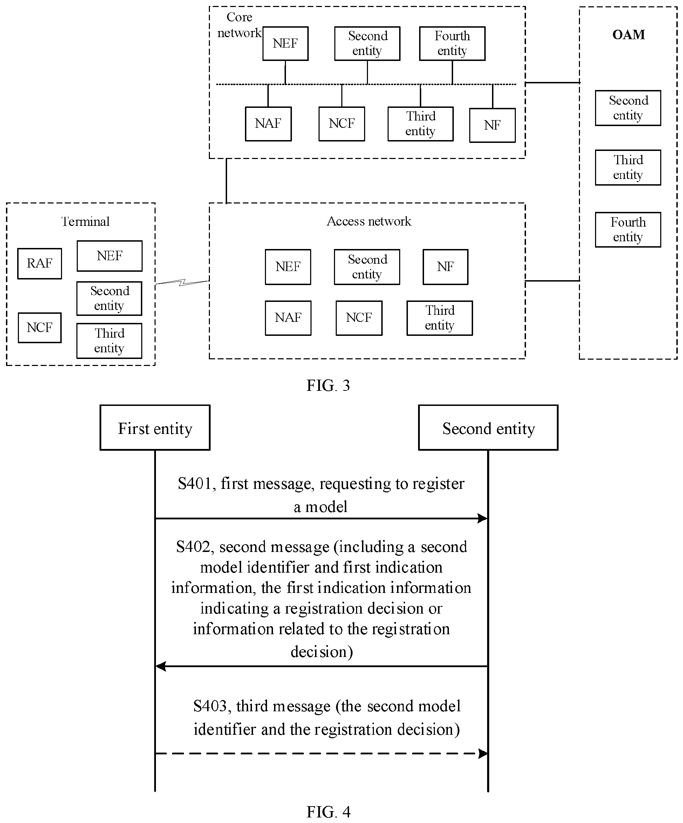

An architecture of the communication system provided by the embodiment of the present disclosure may be as shown in FIG. 2 or FIG. 3. The architecture shown in FIG. 2 is an architecture after a RAN service, and the architecture shown in FIG. 3 is an architecture without RAN service. As shown in FIG. 2 or FIG. 3, the architecture includes a require analyzing function (Require Analysing Function, RAF) entity, a network adaptability function (Network Adaptability Function, NAF) entity, a network collaboration function (Network Collaboration Function, NCF) entity, at least one network execution function (Network Execution Function, NEF) entity, a second entity, a third entity, and a fourth entity.

The RAF entity is primarily used to determine a service requirement.

Exemplarily, the RAF entity may determine the service requirement by receiving a user request; the RAF entity may also perceive changes in a scenario requirement and determine the service requirement by analyzing perceived data; the RAF entity may also analyze current data/third-party data and historical data through AI algorithms to determine the service requirement.

The NAF entity may be used to determine an execution operation list of a target service according to the service requirement, the execution operation list is a series of execution operations, including connection establishment and assurance, task calculation, data processing, AI training/inference, etc.

The NCF entity may be used to collaborate an execution progress, function and/or resource of at least one NEF entity; and may also be used to determine the execution operation list of the target service.

Each NEF entity may be used to implement a type of function, such as control plane network function, a user plane network function, a data plane network function, a computing network function, etc. That is, the NEF entity may perform a single network service operation, such as connection establishment, data calculation, etc.; the NEF entity may also perform a collaborative operation to complete provision of a complex service, such as subnet establishment, AI joint training, etc. In other words, an execution operation of one service may be performed by a single NEF entity or by multiple NEF entities in collaboration.

The second entity is mainly used for registration of various AI models.

The second entity may also be referred to as an AI model registration function (AI Model Registration Function, AIMRF) entity.

The third entity is mainly used to store an AI model, and the AI model stored in the third entity is the AI model that has been registered in the second entity.

The third entity may also be referred to as an AI model storage function (AI Model Storage Function, AIMSF) entity.

The fourth entity is mainly used to verify security, privacy protection and performance of the AI model.

The fourth entity may also be referred to as an AI model authentication function (AI Model Authentication Function, AIMAF) entity.

The second entity may be deployed in a second terminal, a second access network device or a second core network device; the third entity may be deployed in a third terminal, a third access network device or a third core network device; the fourth entity is deployed in a fourth access network device or a fourth core network device; the second terminal and the third terminal are the same or different, the second access network device, the third access network device and the fourth access network device are the same or different, and the second core network device, the third core network device and the fourth core network device are the same or different.

When the second entity is deployed in the second terminal, it may be deployed in the second terminal through software, may be deployed in the second terminal through hardware, or may be deployed in the second terminal through a combination of software and hardware.

When the third entity is deployed on the third terminal, it may be deployed on the third terminal through software, may be deployed on the third terminal through hardware, or may be deployed on the third terminal through a combination of software and hardware.

When the above entities are deployed in the access network device, it may refer to that the above entities are deployed on an existing functional entity such as a network function (Network Function, NF) entity, an operation administration and maintenance (Operation Administration and Maintenance, OAM) entity, or the above entities may be deployed as a separate device in the access network.

When the above entities are deployed in a core network device, it may refer to that the above entities are deployed on the existing functional entities such as the NF entity, the OAM entity, etc., or the above entities may be deployed as a separate device in the core network.

The architecture of the communication system of the embodiment of the present disclosure includes not only the above entities, but also other functional entities, such as a network-resource registration and collection function (Network-resource Registration and Collection Function, NRCF) entity (which may be used to register a network resource and receive an updating on a state of a network function resource), a network service policy function (Network Service Policy Function, NSPF) entity (which may be used to generate a QoS indicator parameter and save QoS indicator parameters generated by other network elements), a PCF entity, an AMF entity, an SMF entity and/or an UPF entity, which is not limited in the embodiment of the present disclosure.

It should be noted that the names of the above entities are only examples, and the embodiments of the present disclosure do not limit the names of the entities. As long as the functions implemented are the same or similar, they may be considered to be the same entity.

On the basis of the above communication system architecture, how multiple entities in the architecture interact to achieve on-demand provision of services such as the model registration will be illustrated in detail in the following.

FIG. 4 is a flowchart of a model registration method provided by an embodiment of the present disclosure. As shown in FIG. 4, the method includes the following steps.

S401: a first entity sends a first message to a second entity, where the first message is used to request to register a model.

In other words, the second entity receives the first message sent by the first entity.

The first entity may be a first terminal, a first access network device, or a first core network device.

The first terminal, a second terminal and a third terminal are the same or different from each other, the first access network device, a second access network device, a third access network device and a fourth access network device are the same or different from each other, and the first core network device, a second core network device, a third core network device and a fourth core network device are the same or different from each other.

When the first entity is the first access network device, it may be an OAM deployed in an access network, or it may be a NF deployed in an access network.

When the first entity is the first core network device, it may be an OAM deployed in a core network, or it may be a NF deployed in a core network.

The model may be an existing model in the first entity, or a model has been trained by the first entity.

In a possible implementation, the model in the embodiment of the present disclosure may be a common model.

Exemplarily, the model may be a common AI model.

The first message may also be referred to as a model registration request message.

The first message may include a first model identifier and/or model information.

Exemplarily, the first message includes the first model identifier and the model information.

In another example, the first message includes the first model identifier.

In a possible implementation, when the first message includes the first model identifier, after receiving the first message, the second entity may send second indication information to the first entity, the second indication information may include the first model identifier, a second model identifier and a model information template.

The second indication information may indicate the model information that the first entity needs to report.

The first model identifier may be an identifier of the model in the first entity, and may also be referred to as a model local identifier.

The second model identifier may be a network identifier allocated by the second entity for the model.

After receiving the second indication information, the first entity may send the first message to the second entity again based on the model information template. At this time, the first message carries the model information and the second model identifier.

In a possible implementation, the model information may include at least one of the following: a model type, a model modality, a model algorithm, model precision, model security, model privacy, model description information, a model deployment requirement, model inference performance, a model open scope, a model version, model owner information, or an automated deployment script.

The model type may indicate that the model is a basic algorithm model or an industry-specific model, etc.

The model modality may include voice, text, image, multimodality, etc.

The model algorithm may indicate an algorithm type of the model, which may include supervised learning, deep learning, reinforcement learning, etc.; the model algorithm may also be used to indicate an algorithm subtype, which may include a deep q-leaning network (Deep Q-Leaning Network, DQN) algorithm, a support vector machine (Support Vector Machine, SVM) algorithm, etc.

When the algorithm type of the model is the reinforcement learning, its algorithm subtype may be the DQN algorithm; when the algorithm type of the model is the supervised learning, its algorithm subtype may be the SVM algorithm.

The model accuracy indicates average accuracy of model inference.

The model security may describe characteristics and capabilities of the model in terms of security protection, including model security authentication, a security level, an encryption algorithm, etc.

The model privacy may describe characteristics and capabilities of the model in terms of privacy protection, including data privacy protection authentication, a privacy protection level, etc.

The model inference performance may indicate model performance under a recommended configuration.

Exemplarily, the model inference performance may include single inference latency and/or concurrent performance. The single inference latency may refer to latency of a single inference of the model when less than 70% of recommended resources are run; the concurrent performance may refer to maximum concurrent performance when running the recommended resources.

The model open scope may indicate an open scope of the model.

Exemplarily, the model opening scope may be open to an entire network, network private use, a group of users, etc.; where the group of users may refer to users in a cell, that is, the model is only open to the users in a certain cell.

The model version may indicate a version of the model.

The model owner information may indicate a model owner.

The automated deployment script may indicate whether to provide the automated deployment script.

In a possible implementation, the model description information may include at least one of the following: model accuracy, variance of the model accuracy, a data input format, a data output format, a model size, a full model identifier corresponding to a compressed model, a model parameter count, a model recall, or a model F1 value.

The model accuracy may indicate average accuracy of the model.

The variance of the model accuracy may refer to a fluctuation degree of the model accuracy.

A model input format may indicate a format and a structure of model input data.

A model output format may indicate a format and a structure of model output data.

The model size may refer to a size of the model, and its unit include KB, MB, GB, etc.

When the model is a compressed model, the model description information may include a full model identifier corresponding to the compressed model, and the full model identifier may be used to indicate an uncompressed model identifier.

The model parameter count may indicate a parameter count of the model.

The model recall can indicate an average recall of the model.

In a possible implementation, the model deployment requirement includes at least one of the following: model dependency, a minimum resource requirement, or a recommended resource configuration, and the resource includes a computing power resource and a storage resource.

The model dependency may indicate dependency when deploying the model.

Exemplarily, the model dependency may include a dependency framework, a computing power type, and may also include a dependency library. The dependency framework may indicate a framework that the model depends on, and may also indicate a framework version; the computing power type may indicate the computing power type used by the model, such as a graphics processing unit (Graphics Processing Unit, GPU), a central processing unit (Central Processing Unit, CPU), etc.; and the dependency library may indicate a functional library that the model depends on.

The minimum resource requirement may indicate a minimum resource requirement required for model inference.

Exemplarily, the minimum resource requirement may include a minimum computing power resource requirement, a minimum memory requirement, and a minimum storage requirement; where the minimum computing power resource requirement may indicate a computing power type and a computing power size required for the model inference, the minimum memory requirement may indicate a memory type and a memory size required for the model inference, and the minimum storage requirement may indicate a storage size required for the model inference.

The recommended resource configuration may indicate the recommended configuration for the model inference.

Exemplarily, the recommended resource configuration may include an amount of recommended computing power resources, an amount of recommended memory, and an amount of recommended storage; where the amount of recommended computing resources may indicate the computing power type and the computing power size recommended for use during the model inference, the amount of recommended memory may indicate the memory type and the memory size recommended for use during the model inference, and the amount of recommended storage may indicate the storage size recommended for use during the model inference.

In a possible implementation, the model information may also include at least one of the following: a model application scenario, model segmentation information, model compression information, or model training information.

The model application scenario may indicate a scenario where the model is applied, including wireless communication, healthcare, education, transportation, etc.

The model application scenario may also indicate a model application field, the model application field may indicate a field of the model in a corresponding scenario. For example, in a wireless communication scenario, the model application field may include resource scheduling, mobility management, etc. In a traffic scenario, the model application field may include image recognition, route navigation, etc.

The model segmentation information may indicate that the model is a segmented part of the model or an unsegmented model.

The model compression information may indicate whether the model is a compressed model.

In a possible implementation, the model training information may include at least one of the following: a training dataset, metadata corresponding to the training dataset, a data preprocessing method, a model feature, a model hyperparameter, or a model structure.

The training dataset of the model may indicate dataset information for model training, and may include at least one of a dataset identifier, a dataset format, or a dataset label name.

After receiving the model information, the second entity may query registration information of the model stored by itself, and may also query the third entity about whether a model with the same performance already exists.

Exemplarily, the registration information of the model may be as shown in Table 1.

**Table 1 Registration information of the model**

| Parameter Name | | | Parameter Meaning |
|---|---|---|---|
| Second model identifier | | | Unique identifier of a model in a network |
| Model Type | | | Indicating that the model is a basic algorithm model or an industry-specific model, etc. |
| Model application scenario | | | Indicating a scenario where the model is applied |
| | -Model application field | | Indicating a field of the model in a corresponding scenario |
| Model modality | | | Voice, text, image, multimodality, etc. |
| Model algorithm | | | Indicating an algorithm type and an algorithm subtype of the model |
| Model precision | | | Indicating average accuracy of model inference |
| Model segmentation information | | | Indicating that the model is a segmented part of the model or an unsegmented model |
| Model compression information | | | Indicating whether the model is a compressed model |
| Model security | | | Describing characteristics and capabilities of the model in terms of security protection |
| Model privacy | | | Describing characteristics and capabilities of the model in terms of privacy protection |
| Model description | | | |
| | -Model accuracy | | Indicating average accuracy of the model |
| | -Model accuracy performance | | Indicating variance of the model accuracy |
| | -Data input format | | Indicating a format and a structure of model input data |
| | -Data output format | | Indicating a format and a structure of model output data |
| | -Model size | | Indicating a size of the model. |
| | -Full model ID of a compressed model | | If the model is a compressed model, indicating ID of uncompressed model |
| | -Model parameter count | | Indicating a parameter count of model |
| | -Model performance | | |
| | | --Recall | Indicating an average recall of the model |
| | | --F1 value | Indicating the F1 value of the model |
| Model deployment requirement | | | |
| | -Model dependency | | Indicating dependency when deploying the model |
| | | --Dependency framework | Indicating a framework that the model depends on and a framework version |
| | | --Computing power type | Indicating a used computing power type |
| | | --Dependency library | Indicating a functional library that the model depends on |
| | -Minimum resource requirement | | Indicating a minimum resource requirement required for model inference |
| | | --Minimum computing power resource requirement | Indicating a used computing power type and computing power size |
| | | --Minimum memory requirement | Indicating a memory type and a memory size |
| | | --Minimum storage requirement | Indicating a storage size |
| | -Recommended resource configuration | | Indicating a recommended configuration for the model inference |
| | | --Amount of recommended computing power resources | Indicating a used computing power type and computing power size |
| | | --Amount of recommended memory | Indicating a memory type and a memory size |
| | | --Amount of recommended storage | Indicating a storage size |
| Model inference performance | | | Indicating model performance under the recommended configuration |
| | -Single inference latency | | Latency of a single inference of the model when running resources do not exceed 70% of recommended resources |
| | -Concurrent performance | | Maximum concurrent performance of running recommended resources |
| Model training information | | | |
| | -Training dataset | | Dataset information for model training |
| | | --Dataset ID | Dataset ID used by the model training |
| | | --Dataset format | Dataset format used by the model training |
| | | --Dataset label name | Dataset label of dataset during the model training |
| | -Training data metadata | | Metadata of a model training dataset |
| | -Data preprocessing method | | Pre-processing method of a dataset |
| | -Model feature | | Indicating feature used during the model training |
| | -Model hyperparameter | | Indicating a hyperparameter parameter for the model training |
| | -Model structure | | Indicating a structure of model design |
| Model open scope | | | Indicating an open scope of the model |
| Model version | | | Indicating a version of the model |
| Model owner information | | | Indicating a model owner |
| | -Model owner ID | | Identity an identifier provided by a network for an owner |
| Automated deployment script | | | Indicating whether to provide an automated deployment script |

It should be noted that, in some embodiments, the registration information of the model may not include at least one of the model application scenario, the model segmentation information, the model compression information, the full model ID of the compressed model, the model parameter count, the model performance, a model dependency library, or the model training information. The model algorithm may not indicate the algorithm subtype. The model dependency framework may not indicate the framework version.

The model information may be a part of the registration information of the model or may be all of the registration information of the model.

S402: the second entity sends a second message to the first entity in response to the first message.

In other words, the first entity receives the second message sent by the second entity in response to the first message.

The second message may also be referred to as a model registration response message.

The second message may include the second model identifier and first indication information.

In a possible implementation, if the first message includes the first model identifier and the model information, the second message may further include the first model identifier.

The first indication information may indicate a registration decision or information related to the registration decision.

The registration decision may be registration or non-registration or cancellation of registration.

The information related to the registration decision may include a model query result.

If the second entity decides whether to register, the first indication information indicates the registration decision.

If the first entity decides whether to register, the first indication information indicates the information related to the registration decision. After receiving the first indication information, the first entity may execute S403.

S403: the first entity sends a third message to the second entity based on the information related to the registration decision.

In other words, the second entity receives the third message sent by the first entity.

The third message may include the second model identifier and the registration decision.

When the information related to the registration decision includes the model query result, if the model query result is that there is no similar model, the registration decision in the third message may be registration; if the model query structure is that there is an existing similar model, the registration decision in the third message may be the cancellation of registration.

In the embodiment shown in FIG. 4, a communication system builds a common model registration process through interactions between various entities, so that the communication system may intelligently provide a common model registration service to users, networks or third parties based on a common model registration requirement during a communication process.

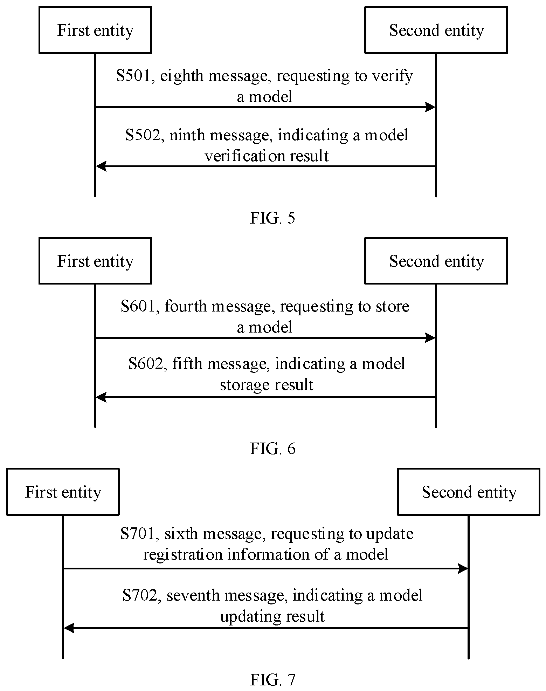

The embodiment shown in FIG. 4 illustrates the common model registration process. A common model verification process is described in detail below in conjunction with FIG. 5. A model verification may be performed before model registration or during a model registration process.

FIG. 5 is a flowchart of a model verification method provided by an embodiment of the present disclosure. As shown in FIG. 5, the method includes the following steps.

S501: a first entity sends an eighth message to a second entity, where the eighth message is used to request to verify a model.

In other words, the second entity receives the eighth message sent by the first entity.

The eighth message may also be referred to as a model verification request message.

The eighth message may include a second model identifier and the model.

After receiving the eighth message, the second entity may verify performance, security, privacy protection and other aspects of the model.

In the embodiment of the present disclosure, the second entity has a model registration function and a model verification function.

S502: the second entity sends a ninth message to the first entity in response to the eighth message, where the ninth message is used to indicate a model verification result.

The ninth message may be referred to as a model verification response message.

The model verification result may be that model verification passed or model verification failed, etc.

In a possible implementation, if the model verification result is that the model verification passed, the ninth message may also include a model security certificate.

On a basis of the embodiment shown in FIG. 5, a model verification may also be performed in the following various manners.
1. The model verification is performed by a third entity. That is, the first entity sends the eighth message to the third entity, and the third entity sends the ninth message to the first entity after verifying the model.
   In this manner, the third entity has the model verification function and a model storage function.
2. The model verification is performed by a fourth entity. That is, the first entity sends the eighth message to the fourth entity, and the fourth entity sends the ninth message to the first entity after verifying the model.
   In this manner, the third entity has the model verification function.
3. The model verification is initiated by the second entity, and the model verification is performed by the third entity. That is, the second entity sends the eighth message to the third entity, and the third entity sends the ninth message to the second entity after verifying the model.
   In this manner, the third entity has the model verification function and the model storage function.
4. The model verification is initiated by the second entity, and the model verification is performed by the fourth entity. That is, the second entity sends the eighth message to the fourth entity, and the fourth entity sends the ninth message to the second entity after verifying the model.

In this manner, the third entity has the model verification function.

The verification process and contents included in the eighth message and the ninth message may be found in the relevant description in the embodiment shown in FIG. 5, and will not be repeated here.

If the model verification is performed during the model registration process, the information related to the registration decision may also include the model verification result.

In the embodiment shown in FIG. 5, a communication system builds a common model verification process through interactions between various entities, so that the communication system may intelligently provide a common model verification service to users, networks or third parties based on a common model verification requirement during a communication process.

On a basis of any of the above embodiments, the common model storage process is described in detail below in conjunction with FIG. 6.

FIG. 6 is a flowchart of a model storage method provided by an embodiment of the present disclosure. As shown in FIG. 6, the method includes the following steps.

S601. a first entity sends a fourth message to a second entity, where the fourth message is used to request to store a model.

In other words, the second entity receives the fourth message sent by the first entity.

The fourth message may be referred to as a model storage request message.

The fourth message may include at least one of the following: a second model identifier, a model transmission manner, a model security certificate, a model address or the model.

The model transmission manner may be determined based on a model size.

The model address may be a storage address of the model.

If the fourth message carries the model, the second entity may directly execute S602; if the fourth message does not carry the model and the model is stored locally, the first entity may send the model to the second entity, and the second entity executes S602 after receiving the model; if the fourth message does not carry the model and the model is not stored locally, the fourth message may carry the model address, and the second entity may interact, based on the model address, with a network element storing the model to obtain the model, and the second entity executes S602 after receiving the model.

After receiving the model, the second entity stores the model.

In the embodiment of the present disclosure, the second entity has a model registration function and a model storage function.

S602: the second entity sends a fifth message to the first entity in response to the fourth message.

In other words, the first entity receives the fifth message sent by the second entity in response to the fourth message.

The fifth message may be referred to as a model storage response message.

The fifth message may be used to indicate a model storage result.

The model storage result may be that model storage is completed.

The fifth message may include the second model identifier and the model storage result.

On a basis of the embodiment shown in FIG. 6, a model verification may also be performed in the following various manners.
1. The model storage is performed by a third entity. That is, the first entity sends the fourth message to the third entity, and the third entity sends the fifth message to the first entity after storing the model.
   In this manner, the third entity has the model storage function.
2. The model storage is initiated by the second entity, and the model storage is performed by the third entity. That is, the second entity sends a tenth message to the third entity, and the third entity sends an eleventh message to the second entity after storing the model.

In this manner, the third entity has the model storage function and a model verification function.

The tenth message can be used to request to store the model.

The tenth message may be referred to as a model storage request message.

The tenth message may include at least one of the following: the second model identifier, the model transmission manner, the model security certificate, or the model.

If the tenth message carries the model, the third entity may send the eleventh message to the second entity after storing the model; if the tenth message does not carry the model and the model is stored locally, the second entity may send the model to the third entity, and the third entity sends the eleventh message to the second entity after receiving the model.

The eleventh message may be used to indicate the model storage result.

The eleventh message may be referred to as a model storage response message.

The eleventh message may include the second model identifier and the model storage result.

3. The model storage is initiated by the second entity, after the fourth entity verified, the third entity performs the model storage. That is, the second entity sends the tenth message to the fourth entity, the fourth entity sends a twelfth message to the third entity, and the third entity sends a thirteenth message to the fourth entity after storing the model; the fourth entity sends the eleventh message to the second entity.

In this manner, the fourth entity has the model storage function and the model verification function.

The relevant descriptions of the tenth message and the eleventh message may be found in the above manner 2, which will not be repeated here.

The twelfth message may be used to request to store the model.

The twelfth message may be referred to as the model storage request message;

The twelfth message may include at least one of the following: the second model identifier, the model transmission manner, the model security certificate, or the model.

If the twelfth message carries the model, the third entity may send the thirteenth message to the fourth entity after storing the model; if the twelfth message does not carry the model and the model is stored in the fourth entity, the fourth entity may send the model to the third entity, and the third entity may send the thirteenth message to the fourth entity after receiving the model.

The thirteenth message may be used to indicate the model storage result.

The thirteenth message may be referred to as the model storage response message.

The thirteenth message may include the second model identifier and the model storage result.

In this manner, the model in the fourth entity may be acquired during a model verification process.

In the embodiment shown in FIG. 6, a communication system builds a common model verification process through interactions between various entities, so that the communication system may intelligently provide a common model verification service to users, networks or third parties based on a common model verification requirement during a communication process.

On a basis of any of the above embodiments, a common model updating process is described in detail below in conjunction with FIG. 7.

FIG. 7 is a flowchart of a model updating method provided by an embodiment of the present disclosure. As shown in FIG. 7, the method includes the following steps.

S701: a first entity sends a sixth message to a second entity.

In other words, the second entity receives the sixth message sent by the first entity.

The sixth message may be used to indicate to update registration information of a model.

The sixth message may include a second model identifier and model updating information.

If model information is part of registration information of the model when the model is registered, the model updating information may be used to complete the registration information of the model. At this time, the model updating information includes information that is not mentioned in the model information and exists in the registration information of the model.

If the first entity optimizes a registered model, the model updating information includes optimized model information.

S702: the second entity sends a seventh message to the first entity in response to the sixth message.

In other words, the first entity receives the seventh message sent by the second entity in response to the sixth message.

The seventh message may be used to indicate a model updating result.

The model updating result may include model updating is completed.

The seventh message may include the second model identifier and the model updating result.

In the embodiment shown in FIG. 7, a communication system builds a common model updating process through interactions between various entities, so that the communication system may intelligently provide a common model updating service to users, networks or third parties based on a common model updating requirement during a communication process.

The above multiple embodiments and multiple manners may be combined randomly.

Exemplarily, the embodiment shown in FIG. 4 is combined with the embodiment shown in FIG. 5, the embodiment shown in FIG. 4 is combined with the manner 1 of the embodiment shown in FIG. 5, the embodiment shown in FIG. 4 is combined with the manner 2 of the embodiment shown in FIG. 5, the embodiment shown in FIG. 4 is combined with the manner 3 of the embodiment shown in FIG. 5, and the embodiment shown in FIG. 4 is combined with the manner 4 the embodiment shown in FIG. 5.

In another exemplary embodiment, the embodiment shown in FIG. 4 and the embodiment shown in FIG. 5 are combined with the embodiment shown in FIG. 6, the embodiment shown in FIG. 4 and the manner 1 of the embodiment shown in FIG. 5 are combined with the embodiment shown in FIG. 6, the embodiment shown in FIG. 4 and the manner 2 of the embodiment shown in FIG. 5 are combined with the embodiment shown in FIG. 6, the embodiment shown in FIG. 4 and the manner 3 of the embodiment shown in FIG. 5 are combined with the embodiment shown in FIG. 6, the embodiment shown in FIG. 4 and the manner 4 the embodiment shown in FIG. 5 are combined with the embodiment shown in FIG. 6, the embodiment shown in FIG. 4 and the embodiment shown in FIG. 5 are combined with the manner 1 of the embodiment shown in FIG. 6, the embodiment shown in FIG. 4 and the manner 1 of the embodiment shown in FIG. 5 are combined with the manner 1 of the embodiment shown in FIG. 6, the embodiment shown in FIG. 4 and the manner 2 of the embodiment shown in FIG. 5 are combined with the manner 1 the embodiment shown in FIG. 6, the embodiment shown in FIG. 4 and the manner 3 of the embodiment shown in FIG. 5 are combined with the manner 1 of the embodiment shown in FIG. 6, the embodiment shown in FIG. 4 and the manner 4 of the embodiment shown in FIG. 5 are combined with the manner 1 of the embodiment shown in FIG. 6, the embodiment shown in FIG. 4 and the embodiment shown in FIG. 5 are combined with the manner 2 of the embodiment shown in FIG. 6, the embodiment shown in FIG. 4 and the manner 1 of the embodiment shown in FIG. 5 are combined with the manner 2 of the embodiment shown in FIG. 6, the embodiment shown in FIG. 4 and the manner 2 of the embodiment shown in FIG. 5 are combined with the manner 2 the embodiment shown in FIG. 6, the embodiment shown in FIG. 4 and the manner 3 of the embodiment shown in FIG. 5 are combined with the manner 2 of the embodiment shown in FIG. 6, the embodiment shown in FIG. 4 and the manner 4 of the embodiment shown in FIG. 5 are combined with the manner 2 of the embodiment shown in FIG. 6, the embodiment shown in FIG. 4 and the embodiment shown in FIG. 5 are combined with the manner 3 of the embodiment shown in FIG. 6, the embodiment shown in FIG. 4 and the manner 1 of the embodiment shown in FIG. 5 are combined with the manner 3 of the embodiment shown in FIG. 6, the embodiment shown in FIG. 4 and the manner 2 of the embodiment shown in FIG. 5 are combined with the manner 3 the embodiment shown in FIG. 6, the embodiment shown in FIG. 4 and the manner 3 of the embodiment shown in FIG. 5 are combined with the manner 3 of the embodiment shown in FIG. 6, the embodiment shown in FIG. 4 and the manner 4 of the embodiment shown in FIG. 5 are combined with the manner 3 of the embodiment shown in FIG. 6.

In yet another exemplary embodiment, the embodiment shown in FIG. 4, the embodiment shown in FIG. 5, and the embodiment shown in FIG. 6 are combined with the embodiment shown in FIG. 7, the embodiment shown in FIG. 4, the embodiment shown in FIG. 5, and the manner 1 of the embodiment shown in FIG. 6 are combined with the embodiment shown in FIG. 7, the embodiment shown in FIG. 4, the embodiment shown in FIG. 5, and the manner 2 of the embodiment shown in FIG. 6 are combined with the embodiment shown in FIG. 7, the embodiment shown in FIG. 4, the embodiment shown in FIG. 5, and the manner 3 of the embodiment shown in FIG. 6 are combined with the embodiment shown in FIG. 7, the embodiment shown in FIG. 4, the manner 1 of the embodiment shown in FIG. 5, and the embodiment shown in FIG. 6 are combined with the embodiment shown in FIG. 7, the embodiment shown in FIG. 4, the manner 1 of the embodiment shown in FIG. 5, and the manner 1 of the embodiment shown in FIG. 6 are combined with the embodiment shown in FIG. 7, the embodiment shown in FIG. 4, the manner 1 of the embodiment shown in FIG. 5, and the manner 2 of the embodiment shown in FIG. 6 are combined with the embodiment shown in FIG. 7, the embodiment shown in FIG. 4, the manner 1 of the embodiment shown in FIG. 5, and the manner 3 of the embodiment shown in FIG. 6 are combined with the embodiment shown in FIG. 7, the embodiment shown in FIG. 4, the manner 2 of the embodiment shown in FIG. 5, and the embodiment shown in FIG. 6 are combined with the embodiment shown in FIG. 7, the embodiment shown in FIG. 4, the manner 2 of the embodiment shown in FIG. 5, and the manner 1 of the embodiment shown in FIG. 6 are combined with the embodiment shown in FIG. 7, the embodiment shown in FIG. 4, the manner 2 of the embodiment shown in FIG. 5, and the manner 2 of the embodiment shown in FIG. 6 are combined with the embodiment shown in FIG. 7, the embodiment shown in FIG. 4, the manner 2 of the embodiment shown in FIG. 5, and the manner 3 of the embodiment shown in FIG. 6 are combined with the embodiment shown in FIG. 7, the embodiment shown in FIG. 4, the manner 3 of the embodiment shown in FIG. 5, the embodiment shown in FIG. 6 are combined with the embodiment shown in FIG. 7, the embodiment shown in FIG. 4, the manner 3 of the embodiment shown in FIG. 5, the manner 1 of the embodiment shown in FIG. 6 are combined with the embodiment shown in FIG. 7, the embodiment shown in FIG. 4, the manner 3 of the embodiment shown in FIG. 5, the manner 2 of the embodiment shown in FIG. 6 are combined with the embodiment shown in FIG. 7, the embodiment shown in FIG. 4, the manner 3 of the embodiment shown in FIG. 5, the manner 3 of the embodiment shown in FIG. 6 are combined with the embodiment shown in FIG. 7, the embodiment shown in FIG. 4, the manner 4 of the embodiment shown in FIG. 5, and the embodiment shown in FIG. 6 are combined with the embodiment shown in FIG. 7, the embodiment shown in FIG. 4, the manner 4 of the embodiment shown in FIG. 5, and the manner 1 of the embodiment shown in FIG. 6 are combined with the embodiment shown in FIG. 7, the embodiment shown in FIG. 4, the manner 4 of the embodiment shown in FIG. 5, and the manner 2 of the embodiment shown in FIG. 6 are combined with the embodiment shown in FIG. 7, the embodiment shown in FIG. 4, the manner 4 of the embodiment shown in FIG. 5, and the manner 3 of the embodiment shown in FIG. 6 are combined with the embodiment shown in FIG. 7.

On a basis of the above multiple embodiments, combined embodiments obtained by combining at least two of the above multiple embodiments are shown below.

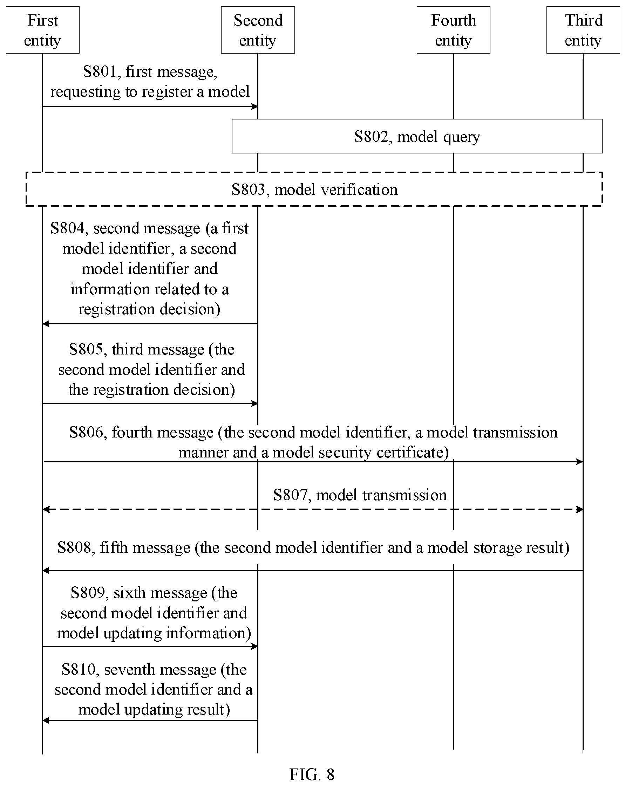

Embodiment 1, as shown in FIG. 8, the method includes the following steps.

S801: a first entity sends a first message to a second entity, where the first message is used to request to register a model.

It should be noted that the execution process of S801 may refer to the execution process of S401. The only difference is that model information in the first message may include necessary information of the model, and the necessary information may include a model type, a model modality, a model algorithm, model precision, model security, model privacy, model description information, a model deployment requirement; or, the model information in the first message may include some of the above necessary information; or, the model information in the first message carries all information in registration information of the model.

In some embodiments, the first message may also include a model application scenario.

S802: model query.

A model query process may refer to the relevant description in S401, which will not be repeated here.

S803: model verification.

A model verification process may refer to the relevant description in the embodiment shown in FIG. 5, which will not be repeated here.

S804: the second entity sends a second message to the first entity in response to the first message, where the second message includes a first model identifier, a second model identifier and information related to a registration decision.

S805: the first entity sends a third message to the second entity based on the information related to the registration decision, where the third message includes the second model identifier and the registration decision.

Execution processes of S804 to S805 may refer to the execution processes of S402 to S403, which will not be repeated here.

S806: the first entity sends a fourth message to the third entity, where the fourth message is used to request to store the model.

The fourth message may include the second model identifier, a model transmission manner and a model security certificate.

In some embodiments, the fourth message may also carry a model address and/or the model.

If the fourth message does not carry the model, S807 may be executed; if the fourth message carries the model, S808 may be executed.

S807: model transmission.

S808: the third entity sends a fifth message to the first entity in response to the fourth message, where the fifth message includes the second model identifier and a model storage result.

It should be noted that the execution processes of S806 to S808 may refer to the execution processes of S601 to S602, which will not be repeated here.

S809: the first entity sends a sixth message to the second entity, where the sixth message includes the second model identifier and model updating information.

S810: the second entity sends a seventh message to the first entity in response to the sixth message, where the seventh message includes the second model identifier and a model updating result.

It should be noted that the execution processes of S809 to S810 may refer to the execution processes of S701 to S702, which will not be repeated here.

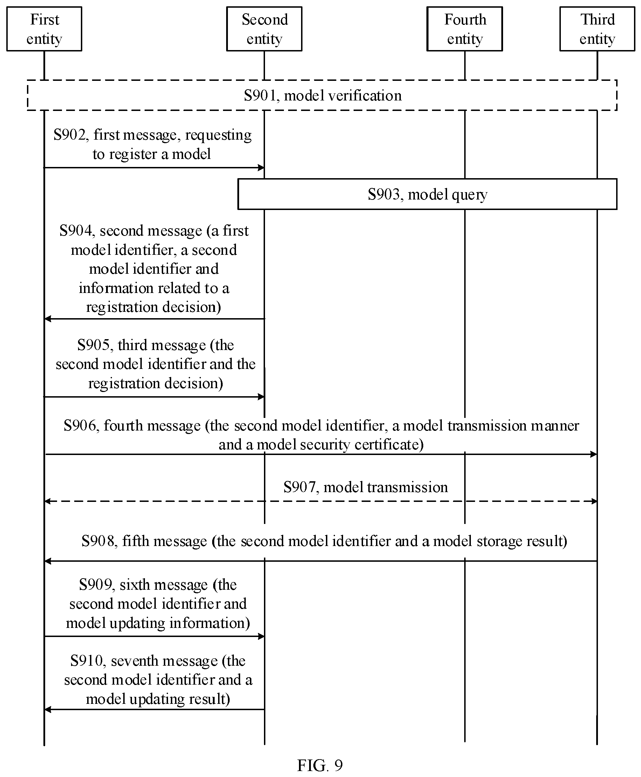

Embodiment 2, as shown in FIG. 9, the method includes the following steps.

S901: model verification.

A model verification process may refer to the relevant description in the embodiment shown in FIG. 5, which will not be repeated here.

S902: a first entity sends a first message to a second entity, where the first message is used to request to register a model.

S903: model query.

The execution processes of S902 to S903 may refer to the execution processes of S801 to S802, which will not be repeated here.

S904: the second entity sends a second message to the first entity in response to the first message, where the second message includes a first model identifier, a second model identifier and information related to a registration decision.

S905: the first entity sends a third message to the second entity based on the information related to the registration decision, where the third message includes the second model identifier and the registration decision.

S906: the first entity sends a fourth message to the third entity, where the fourth message is used to request to store the model.

S907: model transmission.

S908: the third entity sends a fifth message to the first entity in response to the fourth message, where the fifth message includes the second model identifier and a model storage result.

S909: the first entity sends a sixth message to the second entity, where the sixth message includes a second model identifier and model updating information.

S910: the second entity sends a seventh message to the first entity in response to the sixth message, where the seventh message includes the second model identifier and a model updating result.

It should be noted that execution processes of S904 to S910 may refer to the execution processes of S804 to S810, which will not be repeated here.

The difference between the Embodiment 2 and the Embodiment 1 is that the model verification is completed before the model registration.

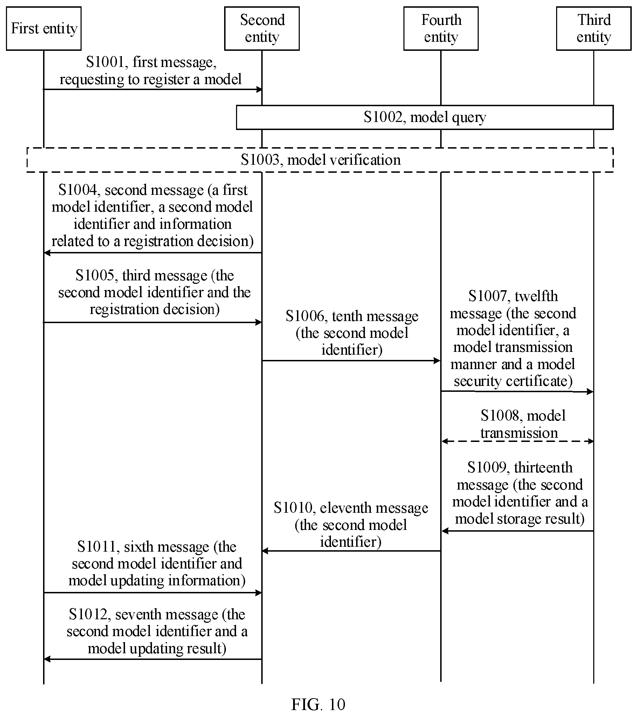

Embodiment 3, as shown in FIG. 10, the method includes the following steps.

S1001: a first entity sends a first message to a second entity, where the first message is used to request to register a model.

S1002: model query.

S1003: model verification.

S1004: the second entity sends a second message to the first entity in response to the first message, where the second message includes a first model identifier, a second model identifier and information related to a registration decision.

S1005: the first entity sends a third message to the second entity based on the information related to the registration decision, where the third message includes the second model identifier and the registration decision.

It should be noted that execution processes of S1001 to S1005 may refer to the execution processes of S801 to S805, which will not be repeated here.

S1006: the second entity sends a tenth message to a fourth entity, where the tenth message is used to request to store the model, the tenth message includes the second model identifier.

S1007: the fourth entity sends a twelfth message to a third entity, where the twelfth message includes the second model identifier, a model transmission manner and a model security certificate.

In some embodiments, the twelfth message may also carry the model.

If the twelfth message does not carry the model, S1008 may be executed; if the twelfth message carries the model, S1009 may be executed.

S1008: model transmission.

S1009: the third entity sends a thirteenth message to the fourth entity in response to the twelfth message, where the thirteenth message includes the second model identifier and a model storage result.

S1010: the fourth entity sends an eleventh message to the second entity, where the eleventh message includes the second model identifier.

It should be noted that execution processes of S1006 to S1010 may refer to the relevant description of the model verification manner 3 of the embodiment shown in FIG. 6, which will not be repeated here.

S1011: the first entity sends a sixth message to the second entity, where the sixth message includes the second model identifier and model updating information.

S1012: the second entity sends a seventh message to the first entity in response to the sixth message, where the seventh message includes the second model identifier and a model updating result.

It should be noted that execution processes of S1011 to S1012 may refer to the execution processes of S701 to S702, which will not be repeated here.

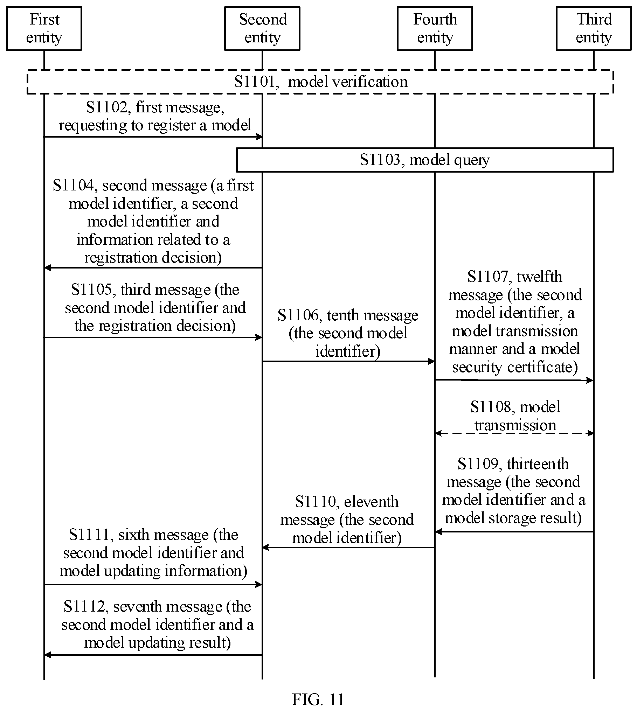

Embodiment 4, as shown in FIG. 11, the method includes the following steps.

S1101: model verification.

A model verification process may refer to the relevant description in the embodiment shown in FIG. 5, which will not be repeated here.

S1102: a first entity sends a first message to a second entity, where the first message is used to request to register a model.

S1103: model query.

S1104: the second entity sends a second message to the first entity in response to the first message, where the second message includes a first model identifier, a second model identifier and information related to a registration decision.

S1105: the first entity sends a third message to the second entity based on the information related to the registration decision, where the third message includes the second model identifier and the registration decision.

S1106: the second entity sends a tenth message to a fourth entity, where the tenth message is used to request to store the model, the tenth message includes the second model identifier.

S1107: the fourth entity sends a twelfth message to a third entity, where the twelfth message includes the second model identifier, a model transmission manner and a model security certificate.

In some embodiments, the twelfth message may also carry the model.

S1108: model transmission.

S1109: the third entity sends a thirteenth message to the fourth entity in response to the twelfth message, where the thirteenth message includes the second model identifier and a model storage result.

S1110: the fourth entity sends an eleventh message to the second entity, where the eleventh message includes the second model identifier.

S1111: the first entity sends a sixth message to the second entity, where the sixth message includes the second model identifier and model updating information.

S1112: the second entity sends a seventh message to the first entity in response to the sixth message, where the seventh message includes the second model identifier and a model updating result.

It should be noted that execution processes of S1104 to S1112 may refer to the execution processes of S1004 to S1012, which will not be repeated here.

The difference between the Embodiment 4 and the Embodiment 3 is that the model verification is completed before the model registration.

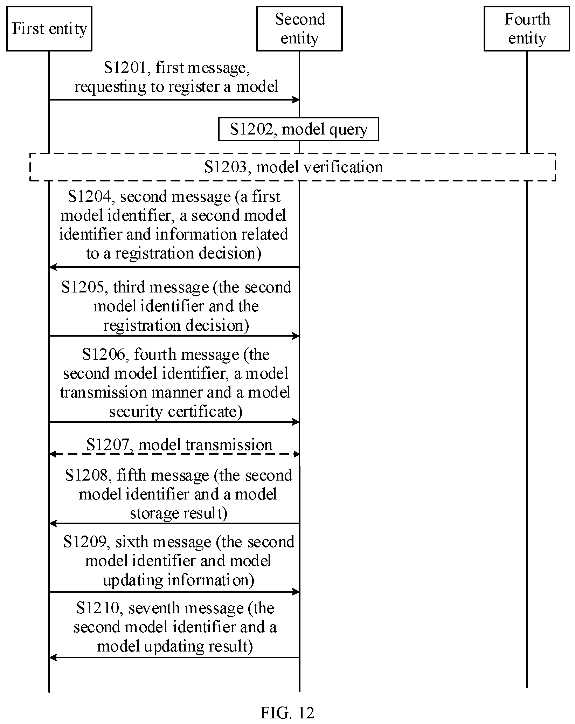

Embodiment 5, as shown in FIG. 12, the method includes the following steps.

S1201: a first entity sends a first message to a second entity, where the first message is used to request to register a model.

S1202: model query.

S1203: model verification.

S1204: the second entity sends a second message to the first entity in response to the first message, where the second message includes a first model identifier, a second model identifier and information related to a registration decision.

S1205: the first entity sends a third message to the second entity based on the information related to the registration decision, where the third message includes the second model identifier and the registration decision.

S1206: the first entity sends a fourth message to the second entity, where the fourth message is used to request to store the model.

S1207: model transmission.

S1208: the second entity sends a fifth message to the first entity in response to the fourth message, where the fifth message includes the second model identifier and a model storage result.

S1209: the first entity sends a sixth message to the second entity, where the sixth message includes the second model identifier and model updating information.

S1210: the second entity sends a seventh message to the first entity in response to the sixth message, where the seventh message includes the second model identifier and a model updating result.

It should be noted that execution processes of S1201 to S1210 may refer to the execution processes of S801 to S810, which will not be repeated here.

The difference between the Embodiment 5 and the Embodiment 1 is that the second entity has a model registration function and a model storage function.

When the second entity has the model registration function, the model storage function and a model verification function, the model verification in S1203 is completed by interaction between the first entity and the second entity.

When the third entity has the model storage function and the model verification function, the model verification in S1203 is completed by the interaction between the first entity and the third entity, and the model storage from S1206 to S1208 is completed by the interaction between the first entity and the third entity.

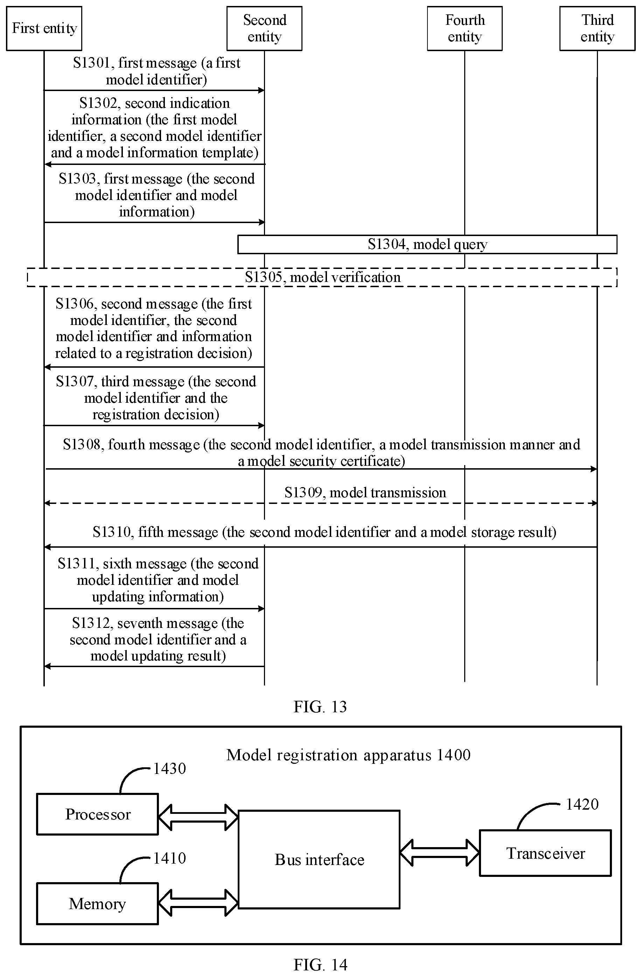

Embodiment 6, as shown in FIG. 13, the method includes the following steps.

S1301: a first entity sends a first message to a second entity, where the first message is used to request to register a model, the first message includes a first model identifier.

S1302: the second entity sends second indication information to the first entity in response to the first message, where the second indication information includes the first model identifier, a second model identifier and a model information template.

S1303: the first entity sends the first message to the second entity based on the model information template, where the first message is used to request to register the model, and the first message includes the second model identifier and model information.

The model information is determined based on the model information template.

S1304: model query.

S1305: model verification.

S1306: the second entity sends a second message to the first entity in response to the first message, where the second message includes the second model identifier and information related to a registration decision.

S1307: the first entity sends a third message to the second entity based on the information related to the registration decision, where the third message includes the second model identifier and the registration decision.

S1308: the first entity sends a fourth message to the third entity, where the fourth message is used to request to store the model.

S1309: model transmission.

S1310: the third entity sends a fifth message to the first entity in response to the fourth message, where the fifth message includes the second model identifier and a model storage result.

S1311: the first entity sends a sixth message to the second entity, where the sixth message includes the second model identifier and model updating information.

S1312: the second entity sends a seventh message to the first entity in response to the sixth message, where the seventh message includes the second model identifier and a model updating result.

It should be noted that execution processes of S1304 to S1312 may refer to the execution processes of S802 to S810, which will not be repeated here.

It should be noted that the above embodiments are only examples, and model registration, the model verification, model storage, and model updating may also be combined in other manners.

FIG. 14 is a schematic structural diagram of a model registration apparatus 1400 provided by an embodiment of the present disclosure. As shown in FIG. 14, the apparatus 1400 includes: a memory 1410, a transceiver 1420, and a processor 1430.

The memory 1410 is configured to store computer programs; the transceiver 1420 is configured to send and receive data under control of the processor 1430; the processor 1430 is configured to read the computer programs stored in the memory 1410 and perform the following operations:
sending a first message to a second entity, where the first message is used to request to register a model, the first message includes a first model identifier and/or model information, and the first model identifier is an identifier of the model in a first entity;
receiving a second message sent by the second entity in response to the first message, where the second message includes a second model identifier and first indication information, the second model identifier is a network identifier allocated by the second entity for the model, and the first indication information indicates a registration decision or information related to the registration decision; and
sending a third message to the second entity based on the information related to the registration decision, where the third message includes the second model identifier and the registration decision.

In an implementation, the model is a common model.

In an implementation, the model information includes at least one of the following: a model type, a model modality, a model algorithm, model precision, model security, model privacy, model description information, a model deployment requirement, model inference performance, a model open scope, a model version, model owner information, or an automated deployment script.

In an implementation, the model description information includes at least one of the following: model accuracy, variance of the model accuracy, a data input format, a data output format, a model size, a full model identifier corresponding to a compressed model, a model parameter count, a model recall, or a model F1 value;
the model deployment requirement includes at least one of the following: model dependency, a minimum resource requirement, or a recommended resource configuration, and the resource includes a computing power resource and a storage resource.

In an implementation, the model information further includes at least one of the following: a model application scenario, model segmentation information, model compression information, or model training information.

In an implementation, the model training information includes at least one of the following: a training dataset, metadata corresponding to the training dataset, a data preprocessing method, a model feature, a model hyperparameter, or a model structure.

In an implementation, the processor 1430 is further configured to perform the following operations:
receiving second indication information sent by the second entity, where the second indication information includes the first model identifier, the second model identifier and a model information template.

In an implementation, the processor 1430 is further configured to perform the following operations:
sending a fourth message to the second entity; and
receiving a fifth message sent by the second entity in response to the fourth message;
   or,
sending the fourth message to a third entity; and
receiving the fifth message sent by the third entity in response to the fourth message;
where the fourth message is used to request to store the model, the fourth message includes at least one of the following: the second model identifier, a model transmission manner, a model security certificate, a model address or the model; and the fifth message is used to indicate a model storage result.

In an implementation, the processor 1430 is further configured to perform the following operations:
sending the model to the second entity or the third entity.

In an implementation, the processor 1430 is further configured to perform the following operations:
sending a sixth message to the second entity, where the sixth message includes the second model identifier and model updating information; and
receiving a seventh message sent by the second entity in response to the sixth message, where the seventh message is used to indicate a model updating result.

In an implementation, the processor 1430 is further configured to perform the following operations:
sending an eighth message to the second entity; and
receiving a ninth message sent by the second entity in response to the eighth message;
   or,
sending the eighth message to a third entity; and
receiving the ninth message sent by the third entity in response to the eighth message;
   or,
sending the eighth message to a fourth entity; and
receiving the ninth message sent by the fourth entity in response to the eighth message;
where the eighth message is used to request to verify the model, the eighth message includes the second model identifier and the model; and the ninth message is used to indicate a model verification result.

It should be noted here that the above model registration apparatus 1400 provided by the present disclosure can implement all the method steps implemented by the first entity in the above method embodiments, and can achieve the same technical effect. The parts and beneficial effects of this embodiment that are the same as the method embodiments will not be repeated here.

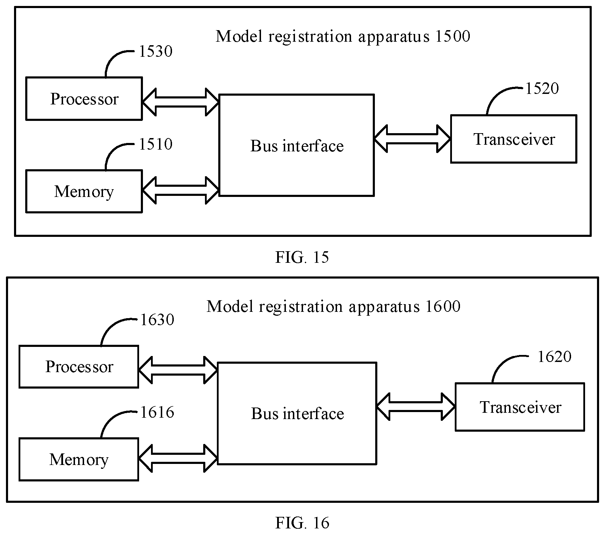

FIG. 15 is a schematic structural diagram of a model registration apparatus 1500 provided by an embodiment of the present disclosure. As shown in FIG. 15, the apparatus 1500 includes: a memory 1510, a transceiver 1520, and a processor 1530.

The memory 1510 is configured to store computer programs; the transceiver 1520 is configured to send and receive data under control of the processor 1530; the processor 1530 is configured to read the computer programs stored in the memory 1510 and perform the following operations:
receiving a first message sent by a first entity, where the first message is used to request to register a model, the first message includes a first model identifier and/or model information, and the first model identifier is an identifier of the model in the first entity;
sending a second message to the first entity in response to the first message, where the second message includes a second model identifier and first indication information, the second model identifier is a network identifier allocated by a second entity for the model, the first indication information indicates a registration decision or information related to the registration decision; and
receiving a third message sent by the first entity, where the third message is a message determined based on the information related to the registration decision, and the third message includes the second model identifier and the registration decision.

In an implementation, the model is a common model.

In an implementation, the model information includes at least one of the following: a model type, a model modality, a model algorithm, model precision, model security, model privacy, model description information, a model deployment requirement, model inference performance, a model open scope, a model version, model owner information, or an automated deployment script.

In an implementation, the model description information includes at least one of the following: model accuracy, variance of the model accuracy, a data input format, a data output format, a model size, a full model identifier corresponding to a compressed model, a model parameter count, a model recall, or a model F1 value;
the model deployment requirement includes at least one of the following: model dependency, a minimum resource requirement, or a recommended resource configuration, and the resource includes a computing power resource and a storage resource.

In an implementation, the model information further includes at least one of the following: a model application scenario, model segmentation information, model compression information, or model training information.

In an implementation, the model training information includes at least one of the following: a training dataset, metadata corresponding to the training dataset, a data preprocessing method, a model feature, a model hyperparameter, or a model structure.

In an implementation, the processor 1530 is further configured to perform the following operations:
sending second indication information to the first entity, where the second indication information includes the first model identifier, the second model identifier and a model information template.

In an implementation, the processor 1530 is further configured to perform the following operations:
receiving a fourth message sent by the first entity, where the fourth message is used to request to store the model, the fourth message includes at least one of the following: the second model identifier, a model transmission manner, a model security certificate, a model address or the model; and
sending a fifth message to the first entity in response to the fourth message, where the fifth message is used to indicate a model storage result.

In an implementation, the processor 1530 is further configured to perform the following operations:
receiving the model.

In an implementation, the processor 1530 is further configured to perform the following operations:
sending a tenth message to a third entity; and
receiving an eleventh message sent by the third entity in response to the tenth message;
   or,
sending the tenth message to a fourth entity; and
receiving the eleventh message sent by the fourth entity in response to the tenth message;
where the tenth message is used to request to store the model, the tenth message includes at least one of the following: the second model identifier, a model transmission manner, a model security certificate or the model; and the eleventh message is used to indicate a model storage result.

In an implementation, the processor 1530 is further configured to perform the following operations:
sending the model to the third entity or the fourth entity.

In an implementation, the processor 1530 is further configured to perform the following operations:
receiving a sixth message sent by the first entity, where the sixth message includes the second model identifier and model updating information; and
sending a seventh message to the first entity in response to the sixth message, where the seventh message is used to indicate a model updating result.

In an implementation, the processor 1530 is further configured to perform the following operations:
receiving an eighth message sent by the first entity, where the eighth message is used to request to verify the model, and the eighth message includes the second model identifier and the model; and
sending a ninth message to the first entity in response to the eighth message, where the ninth message is used to indicate a model verification result.

It should be noted here that the above model registration apparatus 1500 provided by the present disclosure can implement all the method steps implemented by the second entity in the above method embodiments, and can achieve the same technical effect. The parts and beneficial effects of this embodiment that are the same as the method embodiments will not be repeated here.

FIG. 16 is a schematic structural diagram of a model registration apparatus 1600 provided by an embodiment of the present disclosure. As shown in FIG. 16, the apparatus 1600 includes: a memory 1610, a transceiver 1620, and a processor 1630.

The memory 1610 is configured to store computer programs; the transceiver 1620 is configured to send and receive data under control of the processor 1630; the processor 1630 is configured to read the computer programs stored in the memory 1610 and perform the following operations:
receiving a model storage request message, where the model storage request message includes at least one of the following: a second model identifier, a model transmission manner, a model security certificate, a model address or a model, the second model identifier is a network identifier allocated by a second entity for the model, the model storage request message is a fourth message sent by a first entity, a tenth message sent by the second entity, or a twelfth message sent by a fourth entity; and
sending a model storage response message, where the model storage response message is used to indicate a model storage result, and the storage response message is a fifth message sent to the first entity, an eleventh message sent to the second entity, or a thirteenth message sent to the fourth entity.

In an implementation, the processor 1630 is further configured to perform the following operations:
receiving the model.

In an implementation, the processor 1630 is further configured to perform the following operations:
receiving an eighth message sent by the first entity, where the eighth message is used to request to verify the model, and the eighth message includes the second model identifier and the model; and
sending a ninth message to the first entity in response to the eighth message, where the ninth message is used to indicate a model verification result.

It should be noted here that the above model registration apparatus 1600 provided by the present disclosure can implement all the method steps implemented by the third entity in the above method embodiments, and can achieve the same technical effect. The parts and beneficial effects of this embodiment that are the same as the method embodiments will not be repeated here.

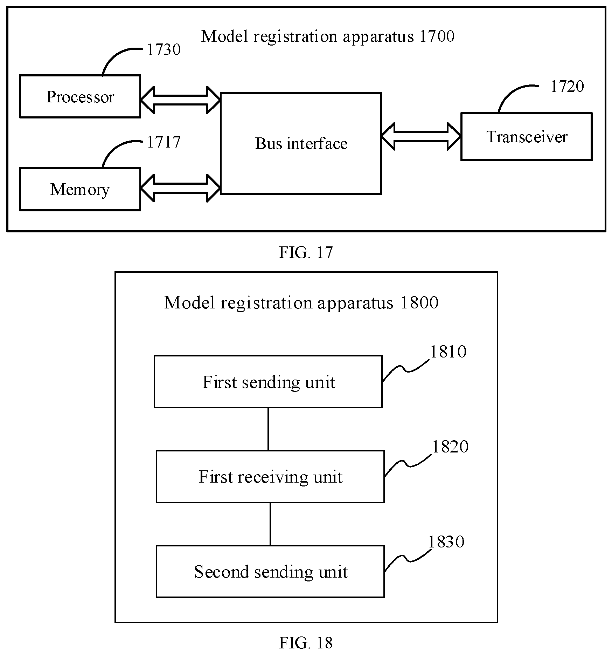

FIG. 17 is a schematic structural diagram of a model registration apparatus 1700 provided by an embodiment of the present disclosure. As shown in FIG. 17, the apparatus 1700 includes: a memory 1710, a transceiver 1720, and a processor 1730.

The memory 1710 is configured to store computer programs; the transceiver 1720 is configured to send and receive data under control of the processor 1730; the processor 1730 is configured to read the computer programs stored in the memory 1710 and perform the following operations:
receiving an eighth message sent by a first entity, where the eighth message is used to request to verify a model, the eighth message includes a second model identifier and the model, and the second model identifier is a network identifier allocated by a second entity for the model; and
sending a ninth message to the first entity in response to the eighth message, where the ninth message is used to indicate a model verification result.

In an implementation, the processor 1730 is further configured to perform the following operations:
receiving a tenth message sent by the second entity, where the tenth message is used to request to store the model, and the tenth message includes the second model identifier; and
sending an eleventh message to the second entity in response to the tenth message, where the eleventh message is used to indicate a model storage result.

In an implementation, the processor 1730 is further configured to perform the following operations:
sending a twelfth message to a third entity, where the twelfth message is used to request to store the model, and the twelfth message includes at least one of the following: the second model identifier, a model transmission manner, a model security certificate or the model; and
receiving a thirteenth message sent by the third entity, where the thirteenth message is used to indicate a model storage result.

It should be noted here that the above model registration apparatus 1700 provided by the present disclosure can implement all the method steps implemented by the fourth entity in the above method embodiments, and can achieve the same technical effect. The parts and beneficial effects of this embodiment that are the same as the method embodiments will not be repeated here.

In FIG. 14 to FIG. 17, when the model registration apparatus is a terminal, the apparatus may also include a user interface. For different terminals, the user interface may also be an interface that can be connected to external and internal required devices. The connected devices include but are not limited to keypads, displays, speakers, microphones, joysticks, etc.

The bus architecture may include any number of interconnected buses and bridges, one or more processors represented by the processor 1430 or the processor 1530 or the processor 1630 or the processor 1730 and various circuits of the memory 1410 or the memory 1510 or the memory 1610 or the memory 1710 are linked together. The bus architecture may also link together various other circuits such as peripherals, voltage regulators, and power management circuits, which are well known in the art and are therefore not further described herein. The bus interface provides an interface. The transceiver may be multiple components, that is, including a transmitter and a receiver, which provides a unit for communicating with various other apparatuses on transmission media, these transmission media include a wireless channel, a wired channel, an optical cable, and the like. The processor is responsible for managing the bus architecture and general processing, and the memory may store data used by the processor when performing operations.

In some embodiments, the processor may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD), and the processor may also adopt a multi-core architecture.

FIG. 18 is a schematic structural diagram of a model registration apparatus 1800 provided by an embodiment of the present disclosure. As shown in FIG. 18, the apparatus 1800 includes:
a first sending unit 1810, configured to send a first message to a second entity, where the first message is used to request to register a model, the first message includes a first model identifier and/or model information, and the first model identifier is an identifier of the model in a first entity;
a first receiving unit 1820, configured to receive a second message sent by the second entity in response to the first message, where the second message includes a second model identifier and first indication information, the second model identifier is a network identifier allocated by the second entity for the model, and the first indication information indicates a registration decision or information related to the registration decision; and
a second sending unit 1830, configured to send a third message to the second entity based on the information related to the registration decision, where the third message includes the second model identifier and the registration decision.

In an implementation, the model is a common model.

In an implementation, the model information includes at least one of the following: a model type, a model modality, a model algorithm, model precision, model security, model privacy, model description information, a model deployment requirement, model inference performance, a model open scope, a model version, model owner information, or an automated deployment script.

In an implementation, the model description information includes at least one of the following: model accuracy, variance of the model accuracy, a data input format, a data output format, a model size, a full model identifier corresponding to a compressed model, a model parameter count, a model recall, or a model F1 value;
the model deployment requirement includes at least one of the following: model dependency, a minimum resource requirement, or a recommended resource configuration, and the resource includes a computing power resource and a storage resource.

In an implementation, the model information further includes at least one of the following: a model application scenario, model segmentation information, model compression information, or model training information.

In an implementation, the model training information includes at least one of the following: a training dataset, metadata corresponding to the training dataset, a data preprocessing method, a model feature, a model hyperparameter, or a model structure.

In an implementation, the apparatus 1800 further includes:
a second receiving unit, configured to receive second indication information sent by the second entity, where the second indication information includes the first model identifier, the second model identifier and a model information template.

In an implementation, the apparatus 1800 further includes:
a third sending unit, configured to send a fourth message to the second entity; and
a third receiving unit, configured to receive a fifth message sent by the second entity in response to the fourth message;
   or,
the third sending unit, configured to send the fourth message to a third entity; and
the third receiving unit, configured to receive the fifth message sent by the third entity in response to the fourth message;
where the fourth message is used to request to store the model, the fourth message includes at least one of the following: the second model identifier, a model transmission manner, a model security certificate, a model address or the model; and the fifth message is used to indicate a model storage result.

In an implementation, the apparatus 1800 further includes:
a fourth sending unit, configured to send the model to the second entity or the third entity.

In an implementation, the apparatus 1800 further includes:
a fifth sending unit, configured to send a sixth message to the second entity, where the sixth message includes the second model identifier and model updating information; and
a fourth receiving unit, configured to receive a seventh message sent by the second entity in response to the sixth message, where the seventh message is used to indicate a model updating result.

In an implementation, the apparatus 1800 further includes:
a sixth sending unit, configured to send an eighth message to the second entity; and
a fifth receiving unit, configured to receive a ninth message sent by the second entity in response to the eighth message;
   or,
the sixth sending unit, configured to send the eighth message to a third entity; and
the fifth receiving unit, configured to receive the ninth message sent by the third entity in response to the eighth message;
   or,
the sixth sending unit, configured to send the eighth message to a fourth entity; and
the fifth receiving unit, configured to receive the ninth message sent by the fourth entity in response to the eighth message;
where the eighth message is used to request to verify the model, the eighth message includes the second model identifier and the model; and the ninth message is used to indicate a model verification result.

In an implementation, the first entity is a first terminal, a first access network device, or a first core network device;
the second entity is deployed on a second terminal, a second access network device or a second core network device;
the third entity is deployed on a third terminal, a third access network device or a third core network device;
the fourth entity is deployed on a fourth access network device or a fourth core network device;
the first terminal, the second terminal and the third terminal are the same or different from each other, the first access network device, the second access network device, the third access network device and the fourth access network device are the same or different from each other, and the first core network device, the second core network device, the third core network device and the fourth core network device are the same or different from each other.

It should be noted here that the above model registration apparatus 1800 provided by the present disclosure can implement all the method steps implemented by the first entity in the above method embodiments, and can achieve the same technical effect. The parts and beneficial effects of this embodiment that are the same as the method embodiments will not be repeated here.

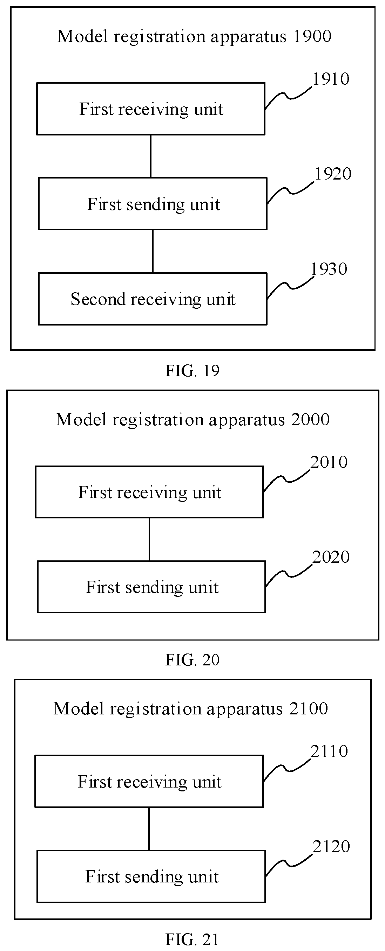

FIG. 19 is a schematic structural diagram of a model registration apparatus 1900 provided by an embodiment of the present disclosure. As shown in FIG. 19, the apparatus 1900 includes:
a first receiving unit 1910, configured to receive a first message sent by a first entity, where the first message is used to request to register a model, the first message includes a first model identifier and/or model information, and the first model identifier is an identifier of the model in the first entity;
a first sending unit 1920, configured to send a second message to the first entity in response to the first message, where the second message includes a second model identifier and first indication information, the second model identifier is a network identifier allocated by a second entity for the model, and the first indication information indicates a registration decision or information related to the registration decision; and
a second receiving unit 1930, configured to receive a third message sent by the first entity, where the third message is a message determined based on the information related to the registration decision, and the third message includes the second model identifier and the registration decision.

In an implementation, the model is a common model.

In an implementation, the model information includes at least one of the following: a model type, a model modality, a model algorithm, model precision, model security, model privacy, model description information, a model deployment requirement, model inference performance, a model open scope, a model version, model owner information, or an automated deployment script.

In an implementation, the model description information includes at least one of the following: model accuracy, variance of the model accuracy, a data input format, a data output format, a model size, a full model identifier corresponding to a compressed model, a model parameter count, a model recall, or a model F1 value;
where the model deployment requirement includes at least one of the following: model dependency, a minimum resource requirement, or a recommended resource configuration, and the resource includes a computing power resource and a storage resource.

In an implementation, the first model information further includes at least one of the following: a model application scenario, model segmentation information, model compression information, or model training information.

In an implementation, the model training information includes at least one of the following: a training dataset, metadata corresponding to the training dataset, a data preprocessing method, a model feature, a model hyperparameter, or a model structure.

In an implementation, the apparatus 1900 further includes:
a second sending unit, configured to send second indication information to the first entity, where the second indication information includes the first model identifier, the second model identifier and a model information template.

In an implementation, the apparatus 1900 further includes:
a third receiving unit, configured to receive a fourth message sent by the first entity, where the fourth message is used to request to store the model, the fourth message includes at least one of the following: the second model identifier, a model transmission manner, a model security certificate, a model address or the model; and
a third sending unit, configured to send a fifth message to the first entity in response to the fourth message, where the fifth message is used to indicate a model storage result.

In an implementation, the apparatus 1900 further includes:
a fourth receiving unit, configured to receive the model.

In an implementation, the apparatus 1900 further includes:
a fourth sending unit, configured to send a tenth message to a third entity; and
a fifth receiving unit, configured to receive an eleventh message sent by the third entity in response to the tenth message;
   or,
the fourth sending unit, configured to send the tenth message to a fourth entity; and
the fifth receiving unit, configured to receive the eleventh message sent by the fourth entity in response to the tenth message;
where the tenth message is used to request to store the model, the tenth message includes at least one of the following: the second model identifier, a model transmission manner, a model security certificate or the model; and the eleventh message is used to indicate a model storage result.

In an implementation, the apparatus 1900 further includes:
a fifth sending unit, configured to send the model to the third entity or the fourth entity.

In an implementation, the apparatus 1900 further includes:
a sixth receiving unit, configured to receive a sixth message sent by the first entity, where the sixth message includes the second model identifier and model updating information; and
a sixth sending unit, configured to send a seventh message to the first entity in response to the sixth message, where the seventh message is used to indicate a model updating result.

In an implementation, the apparatus 1900 further includes:
a seventh receiving unit, configured to receive an eighth message sent by the first entity, where the eighth message is used to request to verify the model, and the eighth message includes the second model identifier and the model; and
a seventh sending unit, configured to send a ninth message to the first entity in response to the eighth message, where the ninth message is used to indicate a model verification result.

It should be noted here that the above model registration apparatus 1900 provided by the present disclosure can implement all the method steps implemented by the second entity in the above method embodiments, and can achieve the same technical effect. The parts and beneficial effects of this embodiment that are the same as the method embodiments will not be repeated here.

FIG. 20 is a schematic structural diagram of a model registration apparatus 2000 provided by an embodiment of the present disclosure. As shown in FIG. 20, the apparatus 2000 includes:
a first receiving unit 2010, configured to receive a model storage request message, where the model storage request message includes at least one of the following: a second model identifier, a model transmission manner, a model security certificate, a model address or a model, the second model identifier is a network identifier allocated by a second entity for the model, and the model storage request message is a fourth message sent by a first entity, a tenth message sent by the second entity, or a twelfth message sent by a fourth entity; and
a first sending unit 2020, configured to send a model storage response message, where the model storage response message is used to indicate a model storage result, and the storage response message is a fifth message sent to the first entity, an eleventh message sent to the second entity, or a thirteenth message sent to the fourth entity.

In an implementation, the apparatus 2000 further includes:
a second receiving unit, configured to receive the model.

In an implementation, the apparatus 2000 further includes:
a third receiving unit, configured to receive an eighth message sent by the first entity, where the eighth message is used to request to verify the model, and the eighth message includes the second model identifier and the model; and
a second sending unit, configured to send a ninth message to the first entity in response to the eighth message, where the ninth message is used to indicate a model verification result.

It should be noted here that the above model registration apparatus 2000 provided by the present disclosure can implement all the method steps implemented by a third entity in the above method embodiments, and can achieve the same technical effect. The parts and beneficial effects of this embodiment that are the same as the method embodiments will not be repeated here.

FIG. 21 is a schematic structural diagram of a model registration apparatus 2100 provided by an embodiment of the present disclosure. As shown in FIG. 21, the apparatus 2100 includes:
a first receiving unit 2110, configured to receive an eighth message sent by a first entity, where the eighth message is used to request to verify a model, the eighth message includes a second model identifier and the model, and the second model identifier is a network identifier allocated by a second entity for the model; and
a first sending unit 2120, configured to send a ninth message to the first entity in response to the eighth message, where the ninth message is used to indicate a model verification result.

In an implementation, the apparatus 2100 further includes:
a second receiving unit, configured to receive a tenth message sent by the second entity, where the tenth message is used to request to store the model, the tenth message includes the second model identifier; and
a second sending unit, configured to send an eleventh message to the second entity in response to the tenth message, where the eleventh message is used to indicate a model storage result.

In an implementation, the apparatus 2100 further includes:
a third sending unit, configured to send a twelfth message to a third entity, where the twelfth message is used to request to store the model, and the twelfth message includes at least one of the following: the second model identifier, a model transmission manner, a model security certificate or the model; and
a third receiving unit, configured to receive a thirteenth message sent by the third entity, where the thirteenth message is used to indicate a model storage result.

It should be noted here that the above model registration apparatus 2100 provided by the present disclosure can implement all the method steps implemented by a fourth entity in the above method embodiments, and can achieve the same technical effect. The parts and beneficial effects of this embodiment that are the same as the method embodiments will not be repeated here.

It should be noted that the division of units in the embodiments of the present disclosure is merely illustrative and is only a logical function division, and there may be other divisions in actual implementation. In addition, each of the functional units in each of the embodiments of the present disclosure may be integrated into one processing unit, or each unit may be physically independent, or two or more units may be integrated into one unit. The above integrated unit may be implemented in the form of hardware or in the form of software functional units.

If the integrated unit is implemented in the form of software functional units and sold or used as independent products, they can be stored in a processor-readable storage medium. Based on this understanding, the technical solution of the present disclosure may be essentially or the part that contributes to the prior art or a part of the technical solution may be embodied in the form of a software product. The computer software product is stored in a storage medium, including several instructions for a computer device (which may be a personal computer, a server, or a network device, etc.) or a processor (processor) to execute all or part of the steps of the method described in each of the embodiments of the present disclosure. The aforementioned storage medium includes: a U disk, a mobile hard disk, a read-only memory (Read-Only Memory, ROM), a random access memory (Random Access Memory, RAM), a magnetic disk or an optical disk or other kinds of media capable of storing program codes.

An embodiment of the present disclosure further provides a non-transitory readable storage medium having computer programs stored therein, the computer programs are used to enable a processor to execute all method steps of the first entity, or all method steps of the second entity, or all method steps of the third entity, or all method steps of the fourth entity in the above method embodiments.

The non-transitory readable storage medium may be any available media or data storage devices that can be accessed by a computer, including but not limited to, magnetic storage (such as a floppy disk, a hard disk, a magnetic tape, a magneto-optical disk (MO), etc.), optical storage (such as CD, DVD, BD, HVD, etc.), and semiconductor storage (such as ROM, EPROM, EEPROM, non-volatile memory (NAND FLASH), solid-state drive (SSD)), etc.

An embodiment of the present disclosure further provides a computer program product, including computer programs, which, when executed by a processor, implements all or part of the steps of the above method embodiments.

Those skilled in the art should understand that embodiments of the present disclosure can be provided as methods, systems, or computer program products. Therefore, the present disclosure may take the form of a complete hardware embodiment, a complete software embodiment, or an embodiment combining software and hardware aspects. Furthermore, the present disclosure may take the form of a computer program product implemented on at least one computer usable storage media (including but not limited to a disk memory, an optical memory, etc.) containing computer usable program codes.

The present disclosure is described with reference to a flowchart and/or a block diagram of the method, device (system), and computer program product according to the embodiments of the present disclosure. It should be understood that each flow and/or block in the flowchart and/or block diagram, and a combination of flow and/or block in the flowchart and/or block diagram may be realized by computer executable instructions. These computer executable instructions may be provided to a processor of a general purpose computer, a special purpose computer, an embedded processor or other programmable data processing devices to generate a machine such that instructions executed by a processor of a computer or other programmable data processing devices generate apparatuses for implementing functions specified in one or more flowcharts and/or one or more block diagrams.

These processor executable instructions may also be stored in a processor readable memory that can guide the computer or other programmable data processing devices to work in a specific way, so that the instructions stored in the processor readable memory generate a manufacture including an instruction apparatus, the instruction apparatus implements the functions specified in one or more flowcharts and/or one or more block diagrams.

These processor executable instructions may also be loaded onto the computer or other programmable data processing devices to enable a series of operating steps to be executed on the computer or other programmable devices to generate a computer implemented process, so that instructions executed on the computer or other programmable devices provide steps for implementing functions specified in a flow or multiple flows in flowcharts and/or a block or multiple blocks in block diagrams.

Obviously, those skilled in the art can make various modifications and variations to the present disclosure without departing from the spirit and scope of the present disclosure. In this way, if these modifications and variations of the present disclosure fall within the scope of the claims and their equivalent technologies of the present disclosure, the present disclosure is also intended to include these modifications and variations.

## Claims

1. A model registration method, **characterized in that** the method is applied to a first entity and comprises:
sending a first message to a second entity, wherein the first message is used to request to register a model, the first message comprises a first model identifier and/or model information, and the first model identifier is an identifier of the model in the first entity;
receiving a second message sent by the second entity in response to the first message, wherein the second message comprises a second model identifier and first indication information, the second model identifier is a network identifier allocated by the second entity for the model, and the first indication information indicates a registration decision or information related to the registration decision; and
sending a third message to the second entity based on the information related to the registration decision, wherein the third message comprises the second model identifier and the registration decision.

2. The method according to claim 1, wherein the model is a common model.

3. The method according to claim 1 or 2, wherein the model information comprises at least one of the following: a model type, a model modality, a model algorithm, model precision, model security, model privacy, model description information, a model deployment requirement, model inference performance, a model open scope, a model version, model owner information, or an automated deployment script.

4. The method according to claim 3, wherein the model description information comprises at least one of the following: model accuracy, variance of the model accuracy, a data input format, a data output format, a model size, a full model identifier corresponding to a compressed model, a model parameter count, a model recall, or a model F1 value;
wherein the model deployment requirement comprises at least one of the following: model dependency, a minimum resource requirement, or a recommended resource configuration, and the resource comprises a computing power resource and a storage resource.

5. The method according to claim 3, wherein the model information further comprises at least one of the following: a model application scenario, model segmentation information, model compression information, or model training information.

6. The method according to claim 5, wherein the model training information comprises at least one of the following: a training dataset, metadata corresponding to the training dataset, a data preprocessing method, a model feature, a model hyperparameter, or a model structure.

7. The method according to any one of claims 1 to 6, wherein the method further comprises:
receiving second indication information sent by the second entity, wherein the second indication information comprises the first model identifier, the second model identifier and a model information template.

8. The method according to any one of claims 1 to 7, wherein the method further comprises:
sending a fourth message to the second entity; and
receiving a fifth message sent by the second entity in response to the fourth message;
or,
sending the fourth message to a third entity; and
receiving the fifth message sent by the third entity in response to the fourth message;
wherein the fourth message is used to request to store the model, the fourth message comprises at least one of the following: the second model identifier, a model transmission manner, a model security certificate, a model address or the model; and the fifth message is used to indicate a model storage result.

9. The method according to claim 8, wherein the method further comprises:
sending the model to the second entity or the third entity.

10. The method according to any one of claims 1 to 9, wherein the method further comprises:
sending a sixth message to the second entity, wherein the sixth message comprises the second model identifier and model updating information; and
receiving a seventh message sent by the second entity in response to the sixth message, wherein the seventh message is used to indicate a model updating result.

11. The method according to any one of claims 1 to 10, wherein the method further comprises:
sending an eighth message to the second entity; and
receiving a ninth message sent by the second entity in response to the eighth message;
or,
sending the eighth message to a third entity; and
receiving the ninth message sent by the third entity in response to the eighth message;
or,
sending the eighth message to a fourth entity; and
receiving the ninth message sent by the fourth entity in response to the eighth message;
wherein the eighth message is used to request to verify the model, the eighth message comprises the second model identifier and the model; and the ninth message is used to indicate a model verification result.

12. The method according to claim 11, wherein the first entity is a first terminal, a first access network device, or a first core network device;
the second entity is deployed on a second terminal, a second access network device, or a second core network device;
the third entity is deployed on a third terminal, a third access network device, or a third core network device;
the fourth entity is deployed on a fourth access network device or a fourth core network device;
the first terminal, the second terminal, and the third terminal are the same or different from each other, the first access network device, the second access network device, the third access network device, and the fourth access network device are the same or different from each other, and the first core network device, the second core network device, the third core network device, and the fourth core network device are the same or different from each other.

13. A model registration method, **characterized in that** the method is applied to a second entity and comprises:
receiving a first message sent by a first entity, wherein the first message is used to request to register a model, the first message comprises a first model identifier and/or model information, and the first model identifier is an identifier of the model in the first entity;
sending a second message to the first entity in response to the first message, wherein the second message comprises a second model identifier and first indication information, the second model identifier is a network identifier allocated by the second entity for the model, and the first indication information indicates a registration decision or information related to the registration decision; and
receiving a third message sent by the first entity, wherein the third message is a message determined based on the information related to the registration decision, and the third message comprises the second model identifier and the registration decision.

14. The method according to claim 13, wherein the model is a common model.

15. The method according to claim 13 or 14, wherein the model information comprises at least one of the following: a model type, a model modality, a model algorithm, model precision, model security, model privacy, model description information, a model deployment requirement, model inference performance, a model open scope, a model version, model owner information, or an automated deployment script.

16. The method according to claim 15, wherein the model description information comprises at least one of the following: model accuracy, variance of the model accuracy, a data input format, a data output format, a model size, a full model identifier corresponding to a compressed model, a model parameter count, a model recall, or a model F1 value;
wherein the model deployment requirement comprises at least one of the following: model dependency, a minimum resource requirement, or a recommended resource configuration, and the resource comprises a computing power resource and a storage resource.

17. The method according to claim 15, wherein the first model information further comprises at least one of the following: a model application scenario, model segmentation information, model compression information, or model training information.

18. The method according to claim 17, wherein the model training information comprises at least one of the following: a training dataset, metadata corresponding to the training dataset, a data preprocessing method, a model feature, a model hyperparameter, or a model structure.

19. The method according to any one of claims 13 to 18, wherein the method further comprises:
sending second indication information to the first entity, wherein the second indication information comprises the first model identifier, the second model identifier and a model information template.

20. The method according to any one of claims 13 to 19, wherein the method further comprises:
receiving a fourth message sent by the first entity, wherein the fourth message is used to request to store the model, the fourth message comprises at least one of the following: the second model identifier, a model transmission manner, a model security certificate, a model address or the model; and
sending a fifth message to the first entity in response to the fourth message, wherein the fifth message is used to indicate a model storage result.

21. The method according to claim 20, wherein the method further comprises:
receiving the model.

22. The method according to any one of claims 13 to 19, wherein the method further comprises:
sending a tenth message to a third entity; and
receiving an eleventh message sent by the third entity in response to the tenth message;
or,
sending the tenth message to a fourth entity; and
receiving the eleventh message sent by the fourth entity in response to the tenth message;
wherein the tenth message is used to request to store the model, the tenth message comprises at least one of the following: the second model identifier, a model transmission manner, a model security certificate or the model; and the eleventh message is used to indicate a model storage result.

23. The method according to claim 22, wherein the method further comprises:
sending the model to the third entity or the fourth entity.

24. The method according to any one of claims 13 to 23, wherein the method further comprises:
receiving a sixth message sent by the first entity, wherein the sixth message comprises the second model identifier and model updating information; and
sending a seventh message to the first entity in response to the sixth message, wherein the seventh message is used to indicate a model updating result.

25. The method according to any one of claims 13 to 24, wherein the method further comprises:
receiving an eighth message sent by the first entity, wherein the eighth message is used to request to verify the model, and the eighth message comprises the second model identifier and the model; and
sending a ninth message to the first entity in response to the eighth message, wherein the ninth message is used to indicate a model verification result.

26. A model registration method, **characterized in that** the method is applied to a third entity and comprises:
receiving a model storage request message, wherein the model storage request message comprises at least one of the following: a second model identifier, a model transmission manner, a model security certificate, a model address or a model, the second model identifier is a network identifier allocated by a second entity for the model, and the model storage request message is a fourth message sent by a first entity, a tenth message sent by the second entity, or a twelfth message sent by a fourth entity; and
sending a model storage response message, wherein the model storage response message is used to indicate a model storage result, and the storage response message is a fifth message sent to the first entity, an eleventh message sent to the second entity, or a thirteenth message sent to the fourth entity.

27. The method according to claim 26, wherein the method further comprises:
receiving the model.

28. The method according to claim 26 or 27, wherein the method further comprises:
receiving an eighth message sent by the first entity, wherein the eighth message is used to request to verify the model, and the eighth message comprises the second model identifier and the model; and
sending a ninth message to the first entity in response to the eighth message, wherein the ninth message is used to indicate a model verification result.

29. A model registration method, **characterized in that** the method is applied to a fourth entity and comprises:
receiving an eighth message sent by a first entity, wherein the eighth message is used to request to verify a model, the eighth message comprises a second model identifier and the model, and the second model identifier is a network identifier allocated by a second entity for the model; and
sending a ninth message to the first entity in response to the eighth message, wherein the ninth message is used to indicate a model verification result.

30. The method according to claim 29, wherein the method further comprises:
receiving a tenth message sent by the second entity, wherein the tenth message is used to request to store the model, the tenth message comprises the second model identifier; and
sending an eleventh message to the second entity in response to the tenth message, wherein the eleventh message is used to indicate a model storage result.

31. The method according to claim 29 or 30, wherein the method further comprises:
sending a twelfth message to a third entity, wherein the twelfth message is used to request to store the model, and the twelfth message comprises at least one of the following: the second model identifier, a model transmission manner, a model security certificate or the model; and
receiving a thirteenth message sent by the third entity, wherein the thirteenth message is used to indicate a model storage result.

32. A model registration apparatus, **characterized in that** the method is applied to a first entity and comprises:
a first sending unit, configured to send a first message to a second entity, wherein the first message is used to request to register a model, the first message comprises a first model identifier and/or model information, and the first model identifier is an identifier of the model in the first entity;
a receiving unit, configured to receive a second message sent by the second entity in response to the first message, wherein the second message comprises a second model identifier and first indication information, the second model identifier is a network identifier allocated by the second entity for the model, and the first indication information indicates a registration decision or information related to the registration decision; and
a second sending unit, configured to send a third message to the second entity based on the information related to the registration decision, wherein the third message comprises the second model identifier and the registration decision.

33. A model registration apparatus, **characterized in that** the method is applied to a second entity and comprises:
a first receiving unit, configured to receive a first message sent by a first entity, wherein the first message is used to request to register a model, the first message comprises a first model identifier and/or model information, and the first model identifier is an identifier of the model in the first entity;
a sending unit, configured to send a second message to the first entity in response to the first message, wherein the second message comprises a second model identifier and first indication information, the second model identifier is a network identifier allocated by the second entity for the model, and the first indication information indicates a registration decision or information related to the registration decision; and
a second receiving unit, configured to receive a third message sent by the first entity, wherein the third message is a message determined based on the information related to the registration decision, and the third message comprises the second model identifier and the registration decision.

34. A model registration apparatus, **characterized in that** the method is applied to a third entity and comprises:
a receiving unit, configured to receive a model storage request message, wherein the model storage request message comprises at least one of the following: a second model identifier, a model transmission manner, a model security certificate, a model address or a model, the second model identifier is a network identifier allocated by a second entity for the model, and the model storage request message is a fourth message sent by a first entity, a tenth message sent by the second entity, or a twelfth message sent by a fourth entity; and
a sending unit, configured to send a model storage response message, wherein the model storage response message is used to indicate a model storage result, and the storage response message is a fifth message sent to the first entity, an eleventh message sent to the second entity, or a thirteenth message sent to the fourth entity.

35. A model registration apparatus, **characterized in that** the method is applied to a fourth entity and comprises:
a receiving unit, configured to receive an eighth message sent by a first entity, wherein the eighth message is used to request to verify a model, the eighth message comprises a second model identifier and the model, and the second model identifier is a network identifier allocated by a second entity for the model; and
a sending unit, configured to send a ninth message to the first entity in response to the eighth message, wherein the ninth message is used to indicate a model verification result.

36. A model registration apparatus, **characterized in that** the method is applied to a first entity and comprises a memory, a transceiver, and a processor:
wherein the memory is configured to store computer programs; the transceiver is configured to send and receive data under control of the processor; the processor is configured to read the computer programs from the memory and perform the following operations:
sending a first message to a second entity, wherein the first message is used to request to register a model, the first message comprises a first model identifier and/or model information, and the first model identifier is an identifier of the model in the first entity;
receiving a second message sent by the second entity in response to the first message, wherein the second message comprises a second model identifier and first indication information, the second model identifier is a network identifier allocated by the second entity for the model, and the first indication information indicates a registration decision or information related to the registration decision; and
sending a third message to the second entity based on the information related to the registration decision, wherein the third message comprises the second model identifier and the registration decision.

37. The apparatus according to claim 36, wherein the model is a common model.

38. The apparatus according to claim 36 or 37, wherein the model information comprises at least one of the following: a model type, a model modality, a model algorithm, model precision, model security, model privacy, model description information, a model deployment requirement, model inference performance, a model open scope, a model version, model owner information, or an automated deployment script.

39. The apparatus according to claim 38, wherein the model description information comprises at least one of the following: model accuracy, variance of the model accuracy, a data input format, a data output format, a model size, a full model identifier corresponding to a compressed model, a model parameter count, a model recall, or a model F1 value;
wherein the model deployment requirement comprises at least one of the following: model dependency, a minimum resource requirement, or a recommended resource configuration, and the resource comprises a computing power resource and a storage resource.

40. The apparatus according to claim 38, wherein the model information further comprises at least one of the following: a model application scenario, model segmentation information, model compression information, or model training information.

41. The apparatus according to claim 40, wherein the model training information comprises at least one of the following: a training dataset, metadata corresponding to the training dataset, a data preprocessing method, a model feature, a model hyperparameter, or a model structure.

42. The apparatus according to any one of claims 36 to 41, wherein the processor is further configured to perform the following operations:
receiving second indication information sent by the second entity, wherein the second indication information comprises the first model identifier, the second model identifier and a model information template.

43. The apparatus according to any one of claims 36 to 42, wherein the processor is further configured to perform the following operations:
sending a fourth message to the second entity; and
receiving a fifth message sent by the second entity in response to the fourth message;
or,
sending the fourth message to a third entity; and
receiving the fifth message sent by the third entity in response to the fourth message;
wherein the fourth message is used to request to store the model, the fourth message comprises at least one of the following: the second model identifier, a model transmission manner, a model security certificate, a model address or the model; and the fifth message is used to indicate a model storage result.

44. The apparatus according to claim 43, wherein the processor is further configured to perform the following operations:
sending the model to the second entity or the third entity.

45. The apparatus according to any one of claims 36 to 44, wherein the processor is further configured to perform the following operations:
sending a sixth message to the second entity, wherein the sixth message comprises the second model identifier and model updating information; and
receiving a seventh message sent by the second entity in response to the sixth message, wherein the seventh message is used to indicate a model updating result.

46. The apparatus according to any one of claims 36 to 45, wherein the processor is further configured to perform the following operations:
sending an eighth message to the second entity; and
receiving a ninth message sent by the second entity in response to the eighth message;
or,
sending the eighth message to a third entity; and
receiving the ninth message sent by the third entity in response to the eighth message;
or,
sending the eighth message to a fourth entity; and
receiving the ninth message sent by the fourth entity in response to the eighth message;
wherein the eighth message is used to request to verify the model, the eighth message comprises the second model identifier and the model; and the ninth message is used to indicate a model verification result.

47. A model registration apparatus, **characterized in that** the method is applied to a second entity and comprises a memory, a transceiver, and a processor:
wherein the memory is configured to store computer programs; the transceiver is configured to send and receive data under control of the processor; the processor is configured to read the computer programs from the memory and perform the following operations:
receiving a first message sent by a first entity, wherein the first message is used to request to register a model, the first message comprises a first model identifier and/or model information, and the first model identifier is an identifier of the model in the first entity;
sending a second message to the first entity in response to the first message, wherein the second message comprises a second model identifier and first indication information, the second model identifier is a network identifier allocated by the second entity for the model, and the first indication information indicates a registration decision or information related to the registration decision; and
receiving a third message sent by the first entity, wherein the third message is a message determined based on the information related to the registration decision, and the third message comprises the second model identifier and the registration decision.

48. The apparatus according to claim 47, wherein the model is a common model.

49. The apparatus according to claim 47 or 48, wherein the model information comprises at least one of the following: a model type, a model modality, a model algorithm, model precision, model security, model privacy, model description information, a model deployment requirement, model inference performance, a model open scope, a model version, model owner information, or an automated deployment script.

50. The apparatus according to claim 49, wherein the model description information comprises at least one of the following: model accuracy, variance of the model accuracy, a data input format, a data output format, a model size, a full model identifier corresponding to a compressed model, a model parameter count, a model recall, or a model F1 value;
wherein the model deployment requirement comprises at least one of the following: model dependency, a minimum resource requirement, or a recommended resource configuration, and the resource comprises a computing power resource and a storage resource.

51. The apparatus according to claim 49, wherein the model information further comprises at least one of the following: a model application scenario, model segmentation information, model compression information, or model training information.

52. The apparatus according to claim 51, wherein the model training information comprises at least one of the following: a training dataset, metadata corresponding to the training dataset, a data preprocessing method, a model feature, a model hyperparameter, or a model structure.

53. The apparatus according to any one of claims 47 to 52, wherein the processor is further configured to perform the following operations:
sending second indication information to the first entity, wherein the second indication information comprises the first model identifier, the second model identifier and a model information template.

54. The apparatus according to any one of claims 47 to 53, wherein the processor is further configured to perform the following operations:
receiving a fourth message sent by the first entity, wherein the fourth message is used to request to store the model, the fourth message comprises at least one of the following: the second model identifier, a model transmission manner, a model security certificate, a model address or the model; and
sending a fifth message to the first entity in response to the fourth message, wherein the fifth message is used to indicate a model storage result.

55. The apparatus according to claim 54, wherein the processor is further configured to perform the following operations:
receiving the model.

56. The apparatus according to any one of claims 47 to 53, wherein the processor is further configured to perform the following operations:
sending a tenth message to a third entity; and
receiving an eleventh message sent by the third entity in response to the tenth message;
or,
sending the tenth message to a fourth entity; and
receiving the eleventh message sent by the fourth entity in response to the tenth message;
wherein the tenth message is used to request to store the model, the tenth message comprises at least one of the following: the second model identifier, a model transmission manner, a model security certificate or the model; and the eleventh message is used to indicate a model storage result.

57. The apparatus according to claim 56, wherein the processor is further configured to perform the following operations:
sending the model to the third entity or the fourth entity.

58. The apparatus according to any one of claims 47 to 57, wherein the processor is further configured to perform the following operations:
receiving a sixth message sent by the first entity, wherein the sixth message comprises the second model identifier and model updating information; and
sending a seventh message to the first entity in response to the sixth message, wherein the seventh message is used to indicate a model updating result.

59. The apparatus according to any one of claims 47 to 58, wherein the processor is further configured to perform the following operations:
receiving an eighth message sent by the first entity, wherein the eighth message is used to request to verify the model, and the eighth message comprises the second model identifier and the model; and
sending a ninth message to the first entity in response to the eighth message, wherein the ninth message is used to indicate a model verification result.

60. A model registration apparatus, **characterized in that** the method is applied to a third entity and comprises a memory, a transceiver, and a processor:
wherein the memory is configured to store computer programs; the transceiver is configured to send and receive data under control of the processor; the processor is configured to read the computer programs from the memory and perform the following operations:
receiving a model storage request message, wherein the model storage request message comprises at least one of the following: a second model identifier, a model transmission manner, a model security certificate, a model address or a model, the second model identifier is a network identifier allocated by a second entity for the model, and the model storage request message is a fourth message sent by a first entity, a tenth message sent by the second entity, or a twelfth message sent by a fourth entity; and
sending a model storage response message, wherein the model storage response message is used to indicate a model storage result, and the storage response message is a fifth message sent to the first entity, an eleventh message sent to the second entity, or a thirteenth message sent to the fourth entity.

61. The apparatus according to claim 60, wherein the processor is further configured to perform the following operations:
receiving the model.

62. The apparatus according to claim 60 or 61, wherein the processor is further configured to perform the following operations:
receiving an eighth message sent by the first entity, wherein the eighth message is used to request to verify the model, and the eighth message comprises the second model identifier and the model; and
sending a ninth message to the first entity in response to the eighth message, wherein the ninth message is used to indicate a model verification result.

63. A model registration apparatus, **characterized in that** the method is applied to a fourth entity and comprises a memory, a transceiver, and a processor:
wherein the memory is configured to store computer programs; the transceiver is configured to send and receive data under control of the processor; the processor is configured to read the computer programs from the memory and perform the following operations:
receiving an eighth message sent by a first entity, wherein the eighth message is used to request to verify a model, the eighth message comprises a second model identifier and the model, and the second model identifier is a network identifier allocated by a second entity for the model; and
sending a ninth message to the first entity in response to the eighth message, wherein the ninth message is used to indicate a model verification result.

64. The apparatus according to claim 63, wherein the processor is further configured to perform the following operations:
receiving a tenth message sent by the second entity, wherein the tenth message is used to request to store the model, the tenth message comprises the second model identifier; and
sending an eleventh message to the second entity in response to the tenth message, wherein the eleventh message is used to indicate a model storage result.

65. The apparatus according to claim 63 or 64, wherein the processor is further configured to perform the following operations:
sending a twelfth message to a third entity, wherein the twelfth message is used to request to store the model, and the twelfth message comprises at least one of the following: the second model identifier, a model transmission manner, a model security certificate or the model; and
receiving a thirteenth message sent by the third entity, wherein the thirteenth message is used to indicate a model storage result.

66. A non-transitory readable storage medium, **characterized in that** the non-transitory readable storage medium has computer programs stored therein, the computer programs cause a processor to perform the method of any one of claims 1 to 11, or any one of claims 13 to 25, or any one of claims 26 to 28, or any one of claims 29 to 31.
